(19) Europäisches Patentamt
European Patent Office
Office européen des brevets

(11) EP 1 858 722 B1

(12) **EUROPEAN PATENT SPECIFICATION**

(45) Date of publication and mention of the grant of the patent:
**03.12.2008 Bulletin 2008/49**

(21) Application number: **06728940.5**

(22) Date of filing: **06.03.2006**

(51) Int Cl.:
***B60K 6/20*** *(2007.10)*

(86) International application number:
**PCT/JP2006/304824**

(87) International publication number:
**WO 2006/098249 (21.09.2006 Gazette 2006/38)**

(54) **POWER OUTPUT APPARATUS, MOTOR VEHICLE EQUIPPED WITH POWER OUTPUT APPARATUS, AND CONTROL METHOD OF POWER OUTPUT APPARATUS**

LEISTUNGSAUSGANGSGERÄT, KRAFTFAHRZEUG MIT DEM LEISTUNGSAUSGANGSGERÄT UND STEUERVERFAHREN FÜR DAS LEISTUNGSAUSGANGSGERÄT

DISPOSITIF DE PRODUCTION DE PUISSANCE, VEHICULE A MOTEUR EQUIPE D'UN TEL DISPOSITIF, ET PROCEDE DE COMMANDE DU DISPOSITIF DE PRODUCTION DE PUISSANCE

(84) Designated Contracting States:
**DE FR GB**

(30) Priority: **14.03.2005 JP 2005070816**

(43) Date of publication of application:
**28.11.2007 Bulletin 2007/48**

(73) Proprietor: **TOYOTA JIDOSHA KABUSHIKI KAISHA**
**Toyota-shi,**
**Aichi 471-8571 (JP)**

(72) Inventor: **ENDO, Hiroatsu**
**Toyota-shi, Aichi, 4718571 (JP)**

(74) Representative: **TBK-Patent**
**Bavariaring 4-6**
**80336 München (DE)**

(56) References cited:
**EP-A- 1 386 771**
**EP-A- 1 398 196**
**US-A1- 2004 231 897**

- **PATENT ABSTRACTS OF JAPAN vol. 2002, no. 12, 12 December 2002 (2002-12-12) -& JP 2002 225578 A (TOYOTA MOTOR CORP), 14 August 2002 (2002-08-14)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 858 722 B1

## Description

### Technical Field

The present invention relates to a power output apparatus according to the preamble of claim 1 that outputs power to a driveshaft, a motor vehicle that is equipped with the power output apparatus and is driven with the output power to the driveshaft linked to an axle, and a control method of the power output apparatus, according to the preamble of claim 12.

### Background Art

A proposed power output apparatus is mounted on a hybrid vehicle and is equipped with an engine, a planetary gear mechanism having a carrier connected to a crankshaft of the engine and a ring gear connected to a driveshaft, a first motor generator connected to a sun gear of the planetary gear mechanism, a second motor generator connected to the driveshaft via a transmission, and a battery inputting and outputting electric power from and to the first motor generator and the second motor generator (see, for example, JP-A-2004-203220) . In a torque phase during a change of a gear ratio in the transmission, this proposed power output apparatus increases a torque transmitted from the engine to the driveshaft via the first motor generator and accordingly suppresses a decrease in torque output to the driveshaft.
US 2004/231897 A1 discloses a power output apparatus a power output apparatus that outputs power to a driveshaft. This power output apparatus comprises an internal combustion engine, an electric power-mechanical power input output mechanism that is connected to an output shaft of the internal combustion engine and to the driveshaft and transmits at least part of output power of the internal combustion engine to the driveshaft through input and output of electric power and mechanical power, a motor that is capable of inputting and outputting power and an accumulator unit that inputs and outputs electric power from and to the electric power-mechanical power input output mechanism and the motor. EP-A-1 398 196 describes a similar apparatus. Finally, JP-A-2002-225578 discloses a power output apparatus having a motor-generator connected to a driveshaft via a transmission with variable gear ratio.

### Disclosure of the Invention

In the prior art power output apparatus, electric power generated by the first motor generator increases with the increase in torque transmitted from the engine to the driveshaft via the first motor generator. The battery is charged with the surplus of power generation. In some states of charge, however, the battery may receive excessive input of electric power to be overcharged. The prior art power output apparatus does not take into account this potential overcharge.
The power output apparatus, the motor vehicle equipped with the power output apparatus, and the control method of the power output apparatus of the invention thus aim to suppress a decrease in driving force output to a driveshaft during a change of a gear ratio in a transmission, while preventing excessive input of electric power into an accumulator unit. The power output apparatus, the motor vehicle equipped with the power output apparatus, and the control method of the power output apparatus of the invention also aim to effectively prevent a significant decrease in driving force output to the driveshaft during a change of the gear ratio in the transmission.
In order to attain at least part of the above and the other related objects, the power output apparatus, the motor vehicle equipped with the power output apparatus, and the control method of the power output apparatus have the configurations discussed below.
The present invention is directed to a power output apparatus that outputs power to a driveshaft. The power output apparatus includes: an internal combustion engine; an electric power-mechanical power input output mechanism that is connected to an output shaft of the internal combustion engine and to the driveshaft and transmits at least part of output power of the internal combustion engine to the driveshaft through input and output of electric power and mechanical power; a motor that is capable of inputting and outputting power; a gearshift transmission structure that transmits power between a rotating shaft of the motor and the driveshaft with a variable setting of a gear ratio; an accumulator unit that inputs and outputs electric power from and to the electric power-mechanical power input output mechanism and the motor; and a change gear control module that, in response to a decrease in driving force transmitted from the motor to the driveshaft during a change of the gear ratio in the gearshift transmission structure in a state of output of a positive driving force from the motor, controls the internal combustion engine and the electric power-mechanical power input output mechanism to increase a direct driving force, which is directly transmitted from the internal combustion engine to the driveshaft via the electric power-mechanical power input output mechanism, while controlling the motor and the gearshift transmission structure to cause the motor to consume at least part of electric power generated by the electric power-mechanical power input output mechanism under the condition of increasing direct driving force.
In response to a decrease in driving force transmitted from the motor to the driveshaft during a change of the gear ratio in the gearshift transmission structure in the state of output of a positive driving force from the motor, the power output apparatus of the invention controls the internal combustion engine and the electric power-mechanical power input output mechanism to increase the direct driving fore, which is directly transmitted from the internal combustion engine to the driveshaft via the electric power-mechanical power input output mechanism, while controlling the motor and the gearshift transmission structure to cause the motor to consume at least part of the electric power generated by the electric power-mechanical power input output mechanism under the condition of increasing direct driving force. This arrangement effectively suppresses a decrease in driving force output to the driveshaft during the change of the gear ratio in the gearshift transmission structure, while preventing excessive input of electric power into the accumulator unit.

In one preferable embodiment of the power output apparatus of the invention, the change gear control module controls the internal combustion engine and the electric power-mechanical power input output mechanism on the assumption of a decrease in driving force transmitted from the motor to the driveshaft during an upshift change of the gear ratio in the gearshift transmission structure. This arrangement effectively suppresses a decrease in driving force output to the driveshaft during the upshift change of the gear ratio.

In another preferable embodiment of the power output apparatus of the invention, the change gear control module increases a driving force output from the motor by a preset driving force to cause the motor to consume at least part of the electric power generated by the electric power-mechanical power input output mechanism. This simple process desirably causes the motor to consume at least part of the electric power generated by the electric power-mechanical power input output mechanism under the condition of the increasing direct driving force.

In still another preferable embodiment of the power output apparatus of the invention, the gearshift transmission structure switches over an engagement state of an engagement member via a semi-engagement transition to change the setting of the gear ratio, and the change gear control module controls the motor and the gearshift transmission structure to adjust the semi-engagement transition of the engagement member based on a driving force output from the motor and to cause the motor to consume at least part of the electric power generated by the electric power-mechanical power input output mechanism under the condition of the increasing direct driving force.

In one preferable application of the power output apparatus of the invention, the change gear control module controls the internal combustion engine and the electric power-mechanical power input output mechanism on the assumption of a decrease in driving force transmitted from the motor to the driveshaft throughout a torque phase. In this preferable application, the change gear control module may control the internal combustion engine and the electric power-mechanical power input output mechanism on the assumption of a decrease in driving force transmitted from the motor to the driveshaft throughout a state between elapse of a preset time after a gear ratio change instruction and a start of an inertia phase. This simple process readily identifies the start and the end of the torque phase.

In another preferable application of the power output apparatus of the invention, the change gear control module varies a torque input from or output to the electric power-mechanical power input output mechanism to increase the direct driving force. In this case, the change gear control module may vary a rotation speed of the internal combustion engine to increase the direct driving force.

In still another preferable application of the power output apparatus of the invention, the electric power-mechanical power input output mechanism includes: a three shaft-type power input output module that is linked to three shafts, the output shaft of the internal combustion engine, the driveshaft, and a third shaft, and inputs and outputs power from and to a residual one shaft based on powers input from and output to any two shafts among the three shafts; and a generator that inputs and outputs power from and to the third shaft. The electric power-mechanical power input output mechanism may further includes: a pair-rotor motor that has a first rotor connected to the output shaft of the internal combustion engine and a second rotor connected to the driveshaft, and is driven to rotate through relative rotation of the first rotor to the second rotor.

The present invention is also directed to a motor vehicle. The motor vehicle includes: an internal combustion engine; an electric power-mechanical power input output mechanism that is connected to an output shaft of the internal combustion engine and to a driveshaft linked to an axle and transmits at least part of output power of the internal combustion engine to the driveshaft through input and output of electric power and mechanical power; a motor that is capable of inputting and outputting power; a gearshift transmission structure that transmits power between a rotating shaft of the motor and the driveshaft with a variable setting of a gear ratio; an accumulator unit that inputs and outputs electric power from and to the electric power-mechanical power input output mechanism and the motor; and a change gear control module that, in response to a decrease in driving force transmitted from the motor to the driveshaft during a change of the gear ratio in the gearshift transmission structure in a state of output of a positive driving force from the motor, controls the internal combustion engine and the electric power-mechanical power input output mechanism to increase a direct driving force, which is directly transmitted from the internal combustion engine to the driveshaft via the electric power-mechanical power input output mechanism, while controlling the motor and the gearshift transmission structure to cause the motor to consume at least part of electric power generated by the electric power-mechanical power input output mechanism under the condition of increasing direct driving force.

In response to a decrease in driving force transmitted from the motor to the driveshaft during a change of the gear ratio in the gearshift transmission structure in the state of output of a positive driving force from the motor, the motor vehicle of the invention controls the internal combustion engine and the electric power-mechanical power input output mechanism to increase the direct driving force, which is directly transmitted from the internal combustion engine to the driveshaft via the electric power-mechanical power input output mechanism, while controlling the motor and the gearshift transmission structure to cause the motor to consume at least part of the electric power generated by the electric power-mechanical power input output mechanism under the condition of increasing direct driving force. This arrangement effectively suppresses a decrease in driving force output to the driveshaft during the change of the gear ratio in the gearshift transmission structure, while preventing excessive input of electric power into the accumulator unit.

In one preferable embodiment of the motor vehicle of the invention, the gearshift transmission structure switches over an engagement state of an engagement member via a semi-engagement transition to change the setting of the gear ratio, and the change gear control module controls the motor and the gearshift transmission structure to adjust the semi-engagement transition of the engagement member based on a driving force output from the motor and to cause the motor to consume at least part of the electric power generated by the electric power-mechanical power input output mechanism under the condition of the increasing direct driving force.

The present invention is also directed to a control method of a power output apparatus. The power output apparatus includes: an internal combustion engine; an electric power-mechanical power input output mechanism that is connected to an output shaft of the internal combustion engine and to a driveshaft and transmits at least part of output power of the internal combustion engine to the driveshaft through input and output of electric power and mechanical power; a motor that is capable of inputting and outputting power; a gearshift transmission structure that transmits power between a rotating shaft of the motor and the driveshaft with a variable setting of a gear ratio; and an accumulator unit that inputs and outputs electric power from and to the electric power-mechanical power input output mechanism and the motor. In response to a decrease in driving force transmitted from the motor to the driveshaft during a change of the gear ratio in the gearshift transmission structure in a state of output of a positive driving force from the motor, the control method controls the internal combustion engine and the electric power-mechanical power input output mechanism to increase a direct driving force, which is directly transmitted from the internal combustion engine to the driveshaft via the electric power-mechanical power input output mechanism, while controlling the motor and the gearshift transmission structure to cause the motor to consume at least part of electric power generated by the electric power-mechanical power input output mechanism under the condition of increasing direct driving force.

In response to a decrease in driving force transmitted from the motor to the driveshaft during a change of the gear ratio in the gearshift transmission structure in the state of output of a positive driving force from the motor, the control method of the power output apparatus of the invention controls the internal combustion engine and the electric power-mechanical power input output mechanism to increase the direct driving force, which is directly transmitted from the internal combustion engine to the driveshaft via the electric power-mechanical power input output mechanism, while controlling the motor and the gearshift transmission structure to cause the motor to consume at least part of the electric power generated by the electric power-mechanical power input output mechanism under the condition of increasing direct driving force. This arrangement effectively suppresses a decrease in driving force output to the driveshaft during the change of the gear ratio in the gearshift transmission structure, while preventing excessive input of electric power into the accumulator unit.

In one preferable embodiment of the control method of the power output apparatus of the invention, the gearshift transmission structure switches over an engagement state of an engagement member via a semi-engagement transition to change the gear ratio, and the control method controls the motor and the gearshift transmission structure to adjust the semi-engagement transition of the engagement member based on a driving force output from the motor and to cause the motor to consume at least part of the electric power generated by the electric power-mechanical power input output mechanism under the condition of the increasing direct driving force.

## Brief Description of the Drawings

Fig. 1 schematically illustrates the configuration of a hybrid vehicle equipped with a power output apparatus in one embodiment of the invention;

Fig. 2 shows the schematic structure of a transmission included in the hybrid vehicle of the embodiment;

Fig. 3 is a flowchart showing a drive control routine executed by a hybrid electronic control unit included in the hybrid vehicle of the embodiment;

Fig. 4 shows one example of a torque demand setting map;

Fig. 5 shows an efficient operation curve of an engine to set a target rotation speed Ne* and a target torque Te*;

Fig. 6 is an alignment chart showing torque-rotation speed dynamics of respective rotational elements of a power distribution integration mechanism included in the hybrid vehicle of the embodiment;

Fig. 7 is a flowchart showing the details of an upshift process executed at step S170 in the drive control routine of Fig. 3;
Fig. 8 is an alignment chart showing torque-rotation speed dynamics in the transmission in the upshift process;
Fig. 9 shows time variations in rotation speed Nm2 and torque command Tm2* of a motor MG2, direct torque Ter, output torque of a ring gear shaft as a driveshaft, and charge-discharge electric power of a battery in the.upshift process;
Fig. 10 schematically illustrates the configuration of another hybrid vehicle in one modified example; and
Fig. 11 schematically illustrates the configuration of still another hybrid vehicle in another modified example.

## Best Modes of Carrying Out the Invention

One mode of carrying out the invention is discussed below as a preferred embodiment. Fig. 1 schematically illustrates the configuration of a hybrid vehicle 20 equipped with a power output apparatus in one embodiment of the invention. As illustrated, the hybrid vehicle 20 of the embodiment includes an engine 22, a three shaft-type power distribution integration mechanism 30 that is linked to a crankshaft 26 or an output shaft of the engine 22 via a damper 28, a motor MG1 that is linked to the power distribution integration mechanism 30 and has power generation capability, a motor MG2 that is linked to the power distribution integration mechanism 30 via a transmission 60, and a hybrid electronic control unit 70 that controls the whole drive system of the hybrid vehicle 20.

The engine 22 is an internal combustion engine that uses a hydrocarbon fuel, such as gasoline or light oil, to output power. An engine electronic control unit (hereafter referred to as engine ECU) 24 receives signals from diverse sensors that detect operating conditions of the engine 22, and takes charge of operation control of the engine 22, for example, fuel injection control, ignition control, and intake air flow regulation. The engine ECU 24 communicates with the hybrid electronic control unit 70 to control operations of the engine 22 in response to control signals transmitted from the hybrid electronic control unit 70 while outputting data relating to the operating conditions of the engine 22 to the hybrid electronic control unit 70 according to the requirements.

The power distribution integration mechanism 30 includes a sun gear 31 as an external gear, a ring gear 32 as an internal gear arranged concentrically with the sun gear 31, multiple pinion gears 33 engaging with the sun gear 31 and with the ring gear 32, and a carrier 34 holding the multiple pinion gears 33 to allow both their revolutions and their rotations on their axes. The power distribution integration mechanism 30 is thus constructed as a planetary gear mechanism including the sun gear 31, the ring gear 32, and the carrier 34 as rotational elements of differential motions. The carrier 34, the sun gear 31, and the ring gear 32 of the power distribution integration mechanism 30 are respectively linked to the crankshaft 26 of the engine 22, to the motor MG1, and to the motor MG2 via the transmission 60. When the motor MG1 functions as a generator, the power of the engine 22 input via the carrier 34 is distributed into the sun gear 31 and the ring gear 32 corresponding to their gear ratio. When the motor MG1 functions as a motor, on the other hand, the power of the engine 22 input via the carrier 34 is integrated with the power of the motor MG1 input via the sun gear 31 and is output to the ring gear 32. The ring gear 32 is mechanically connected to drive wheels 39a and 39b via a gear mechanism 37 and a differential gear 38. The power output to the ring gear 32 is accordingly transmitted to the drive wheels 39a and 39b via the gear mechanism 37 and the differential gear 38.

The motors MG1 and MG2 are constructed as known synchronous motor generators that may be actuated both as a generator and as a motor. The motors MG1 and MG2 transmit electric powers to and from a battery 50 via inverters 41 and 42 . Power lines 54 connecting the battery 50 with the inverters 41 and 42 are structured as common positive bus and negative bus shared by the inverters 41 and 42. Such connection enables electric power generated by one of the motors MG1 and MG2 to be consumed by the other motor MG2 or MG1. The battery 50 may thus be charged with surplus electric power generated by either of the motors MG1 and MG2, while being discharged to supplement insufficient electric power. The battery 50 is neither charged nor discharged upon the balance of the input and output of electric powers between the motors MG1 and MG2 . Both the motors MG1 and MG2 are driven and controlled by a motor electronic control unit 40 (hereafter referred to as motor ECU 40) . The motor ECU 40 inputs signals required for driving and controlling the motors MG1 and MG2, for example, signals representing rotational positions of rotors in the motors MG1 and MG2 from rotational position detection sensors 43 and 44 and signals representing phase currents to be applied to the motors MG1 and MG2 from current sensors (not shown) . The motor ECU 40 outputs switching control signals to the inverters 41 and 42. The motor ECU 40 executes a rotation speed computation routine (not shown) to calculate rotation speeds Nm1 and Nm2 of the rotors of the motors MG1 and MG2 from the input signals from the rotational position detection sensors 43 and 44. The motor ECU 40 establishes communication with the hybrid electronic control unit 70 to drive and control the motors MG1 and MG2 in response to control signals received from the hybrid electronic control unit 70, while outputting data regarding the driving conditions of the motors MG1 and MG2 to the hybrid electronic control unit 70 according to the requirements.

The transmission 60 is designed to connect and disconnect a rotating shaft 48 of the motor MG2 with and from a ring gear shaft 32a. In the connection state, the transmission 60 reduces the rotation speed of the rotating shaft 48 of the motor MG2 at two different reduction gear ratios and transmits the reduced rotation speed to the ring gear shaft 32a.

One typical structure of the transmission 60 is shown in Fig. 2. The transmission 60 shown in Fig. 2 has a double-pinion planetary gear mechanism 60a, a single-pinion planetary gear mechanism 60b, and two brakes B1 and B2 . The double-pinion planetary gear mechanism 60a includes a sun gear 61 as an external gear, a ring gear 62 as an internal gear arranged concentrically with the sun gear 61, multiple first pinion gears 63a engaging with the sun gear 61, multiple second pinion gears 63b engaging with the multiple first pinion gears 63a and with the ring gear 62, and a carrier 64 coupling the multiple first pinion gears 63a to the multiple second pinion gears 63b to allow, both their revolutions and their rotations on their axes. The engagement and the release of the brake B1 stop and allow the rotation of the sun gear 61. The single-pinion planetary gear mechanism 60b includes a sun gear 65 as an external gear, a ring gear 66 as an internal gear arranged concentrically with the sun gear 65, multiple pinion gears 67 engaging with the sun gear 65 and with the ring gear 66, and a carrier 68 holding the multiple pinion gears 67 to allow both their revolutions and their rotations on their axes. The sun gear 65 and the carrier 68 are respectively connected to the rotating shaft 48 of the motor MG2 and to the ring gear shaft 32a. The engagement and the release of the brake B2 stop and allow the rotation of the ring gear 66. The double-pinion planetary gear mechanism 60a and the single-pinion planetary gear mechanism 60b are coupled with each other via linkage of the respective ring gears 62 and 66 and linkage of the respective carriers 64 and 68. In the transmission 60, the combination of the released brakes B1 and B2 disconnects the rotating shaft 48 of the motor MG2 from the ring gear shaft 32a. The combination of the released brake B1 and the engaged brake B2 reduces the rotation of the rotating shaft 48 of the motor MG2 at a relatively high reduction gear ratio and transmits the reduced rotation to the ring gear shaft 32a. This state is expressed as Lo gear position. The combination of the engaged brake B1 and the released brake B2 reduces the rotation of the rotating shaft 48 of the motor MG2 at a relatively low reduction gear ratio and transmits the reduced rotation to the ring gear shaft 32a. This state is expressed as Hi gear position. The combination of the engaged brakes B1 and B2 prohibits the rotations of the rotating shaft 48 and the ring gear shaft 32a.

The battery 50 is under control of a battery electronic control unit (hereafter referred to as battery ECU) 52. The battery ECU 52 receives diverse signals required for control of the battery 50, for example, an inter-terminal voltage measured by a voltage sensor (not shown) disposed between terminals of the battery 50, a charge-discharge current measured by a current sensor (not shown) attached to the power line 54 connected with the output terminal of the battery 50, and a battery temperature Tb measured by a temperature sensor (not shown) attached to the battery 50. The battery ECU 52 outputs data relating to the state of the battery 50 to the hybrid electronic control unit 70 via communication according to the requirements. The battery ECU 52 calculates a state of charge (SOC) of the battery 50, based on the accumulated charge-discharge current measured by the current sensor, for control of the battery 50.

The hybrid electronic control unit 70 is constructed as a microprocessor including a CPU 72, a ROM 74 that stores processing programs, a RAM 76 that temporarily stores data, input and output ports (not shown), and a communication port (not shown). The hybrid electronic control unit 70 receives, via its input port, an ignition signal from an ignition switch 80, a gearshift position SP or a current setting position of a gearshift lever 81 from a gearshift position sensor 82, an accelerator opening Acc or the driver's depression amount of an accelerator pedal 83 from an accelerator pedal position sensor 84, a brake pedal position BP or the driver's depression amount of a brake pedal 85 from a brake pedal position sensor 86, and a vehicle speed V from a vehicle speed sensor 88. The hybrid electronic control unit 70 outputs, via its output port, driving signals to hydraulic actuators (not shown) for the brakes B1 and B2 included in the transmission 60. The hybrid electronic control unit 70 establishes communication with the engine ECU 24, the motor ECU 40, and the battery ECU 52 via its communication port to receive and send the diversity of control signals and data from and to the engine ECU 24, the motor ECU 40, and the battery ECU 52 as mentioned above.

The hybrid vehicle 20 of the embodiment thus constructed calculates a torque demand to be output to the ring gear shaft 32a functioning as the drive shaft, based on observed values of a vehicle speed V and an accelerator opening Acc, which corresponds to a driver's step-on amount of an accelerator pedal 83. The engine 22 and the motors MG1 and MG2 are subjected to operation control to output a required level of power corresponding to the calculated torque demand to the ring gear shaft 32a. The operation control of the engine 22 and the motors MG1 and MG2 selectively effectuates one of a torque conversion drive mode, a charge-discharge drive mode, and a motor drive mode. The torque conversion drive mode controls the operations of the engine 22 to output a quantity of power equivalent to the required level of power, while driving and controlling the motors MG1 and MG2 to cause all the power output from the engine 22 to be subjected to torque conversion by means of the power distribution integration mechanism 30 and the motors MG1 and MG2 and output to the ring gear shaft 32a. The charge-discharge drive mode controls the operations of the engine 22 to output a quantity of power equivalent to the sum of the required level of power and a quantity of electric power consumed by charging the battery 50 or supplied by discharging the battery 50, while driving and controlling the motors MG1 and MG2 to cause all or part of the power output from the engine 22 equivalent to the required level of power to be subjected to torque conversion by means of the power distribution integration mechanism 30 and the motors MG1 and MG2 and output to the ring gear shaft 32a, simultaneously with charge or discharge of the battery 50. The motor drive mode stops the operations of the engine 22 and drives and controls the motor MG2 to output a quantity of power equivalent to the required level of power to the ring gear shaft 32a.

The description regards the operations of the hybrid vehicle 20 of the embodiment having the configuration discussed above, especially a series of control in response to a gear change in the transmission 60. Fig. 3 is a flowchart showing a drive control routine executed by the hybrid electronic control unit 70 in the hybrid vehicle 20 of the embodiment. This drive control routine is performed repeatedly at preset time intervals, for example, at every 8 msec.

In the drive control routine of Fig. 3, the CPU 72 of the hybrid electronic control unit 70 first inputs various data required for control, that is, the accelerator opening Acc from the accelerator pedal position sensor 84, the vehicle speed V from the vehicle speed sensor 88, the rotation speeds Nm1 and Nm2 of the motors MG1 and MG2, the state of charge SOC of the battery 50, an input limit Win and an output limit Wout of the battery 50, and a gear ratio Gr of the transmission 60 (step S100). The rotation speeds Nm1 and Nm2 of the motors MG1 and MG2 are computed from the rotational positions of the respective rotors in the motors MG1 and MG2 detected by the rotational position detection sensors 43 and 44 and are received from the motor ECU 40 by communication. The state of charge SOC of the battery 50 is computed from the accumulated charge-discharge current of the battery 50 measured by the electric current sensor (not shown) and is received from the battery ECU 52 by communication. The input limit Win and the output limit Wout of the battery 50 are set based on the battery temperature Tb and the state of charge SOC and are received from the battery ECU 52 by communication. The input gear ratio Gr of the transmission 60 represents the changed gear position and is basically either a high gear ratio Ghi for the Hi gear position or a low gear ratio Glo for the Lo gear position.. During the gear change, the input gear ratio Gr of the transmission 60 is calculated by dividing the rotation speed Nm2 of the motor MG2 by a rotation speed Nr of the ring gear shaft 32a. The rotation speed Nr of the ring gear shaft 32a is obtained by multiplying the vehicle speed V by a preset conversion factor k.

After the data input, the CPU 72 sets a torque demand Tr* to be output to the ring gear shaft 32a or a driveshaft linked with the drive wheels 39a and 39b and an engine power demand Pe* to be output from the engine 22, based on the input accelerator opening Acc and the input vehicle speed V (step S110). A concrete procedure of setting the torque demand Tr* in this embodiment stores in advance variations in torque demand Tr* against the accelerator opening Acc and the vehicle speed V as a torque demand setting map in the ROM 74 and reads the torque demand Tr* corresponding to the given accelerator opening Acc and the given vehicle speed V from this torque demand setting map. One example of the torque demand setting map is shown in Fig. 4. The engine power demand Pe* is calculated as the sum of the product of the torque demand Tr* and the rotation speed Nr of the ring gear shaft 32a, a charge-discharge power demand Pb* to be charged into or discharged from the battery 50, and a potential loss. The charge-discharge power demand Pb* is set according to the state of charge SOC of the battery 50 and the accelerator opening Acc.

The CPU 72 subsequently sets a target rotation speed Ne* and a target torque Te* of the engine 22 corresponding to the engine power demand Pe* (step S120). The target rotation speed Ne* and the target torque Te* of the engine 22 are determined according to an efficient operation line of ensuring efficient operations of the engine 22 and a curve of the engine power demand Pe*. Fig. 5 shows an efficient operation line of the engine 22 to set the target rotation speed Ne* and the target torque Te*. As clearly shown in Fig. 5, the target rotation speed Ne* and the target torque Te* are given as an intersection of the efficient operation line and a curve of constant engine power demand Pe* (= Ne* $\times$ Te*).

The CPU 72 then determines whether the gear ratio of the transmission 60 is currently being changed (during gear change) (step S130). In response to a negative answer at step S130, that is, when the current state is not during gear change, the CPU 72 specifies the presence or the absence of a change gear request for a change of the gear ratio of the transmission 60 (step S140). The change gear request is given at timings specified by the torque demand Tr*, the vehicle speed V, and the current gear position of the transmission 60. In response to negative answers at both steps S130 and S140, that is, when the current state is not during gear change and there is no change gear request, an adjustment torque Tset is set equal to 0 (step S150). The adjustment torque Tset is used to adjust the output torque of the motor MG2 as described later in detail.

The CPU 72 subsequently calculates a target rotation speed Nm1* of the motor MG1 from the target rotation speed Ne* of the engine 22, the rotation speed Nr (= k·V) of the ring gear shaft 32a, and a gear ratio $\rho$ of the power distribution integration mechanism 30 according to Equation (1) given below, while calculating a torque command Tm1* of the motor MG1 from the calculated target rotation speed Nm1* and the current rotation speed Nm1 of the motor MG1 according to Equation (2) given below (step S250). Fig. 6 is an alignment chart showing torque-rotation speed dynamics of the respective rotational elements included in the power distribution integration mechanism 30. The left axis 'S' , the middle axis 'C' , and the right axis 'R' respectively represent the rotation speed of the sun gear 31, the rotation speed of the carrier 34, and the rotation speed Nr of the ring gear 32 (ring gear shaft 32a) . Since the rotation speed of the sun gear 31 is equivalent to the rotation speed Nm1 of the motor MG1 and the rotation speed of the carrier 34 is equivalent to the rotation speed Ne of the engine 22, the target rotation speed Nm1* of the motor MG1 is computable from the rotation speed Nr of the ring gear shaft 32a, the target rotation speed Ne* of the engine 22, and the gear ratio $\rho$ of the power distribution integration mechanism 30 according to Equation (1) given above. Drive control of the motor MG1 with the settings of the torque command Tm1* and the target rotation speed Nm1* enables rotation of the engine 22 at the target rotation speed Ne* . Equation (2) is a relational expression of feedback control to drive and rotate the motor MG1 at the target rotation speed Nm1*. In Equation (2) given above, 'KP' in the second term and 'KI' in the third term on the right side respectively denote a gain of the proportional and a gain of the integral term. The downward thick arrow on the axis 'S' in Fig. 6 represents a torque of reactive force by the motor MG1. The two upward thick arrows on the axis 'R' respectively represent a torque that is directly transmitted to the ring gear shaft 32a when the torque Te* is output from the engine 22 driven at an efficient drive point of the target rotation speed Ne* and the target torque Te*, and a torque that is applied to the ring gear shaft 32a when a torque Tm2* is output from the motor MG2. The former torque is hereafter referred to as direct torque Ter (= -Tm1*/ρ).

$$Nm1^* = (Ne^* \cdot (1+\rho) - k \cdot V) / \rho \qquad (1)$$

$$Tm1^* = \text{Previous } Tm1^* + KP(Nm1^* - Nm1) + KI\int(Nm1^* - Nm1)dt \qquad (2)$$

After calculation of the target rotation speed Nm1* and the torque command Tm1* of the motor MG1, the CPU 72 calculates a tentative motor torque Tm2tmp, which is to be output from the motor MG2 for application of the torque demand Tr* to the ring gear shaft 32a, from the torque demand Tr*, the torque command Tm1* of the motor MG1, the gear ratio ρ of the power distribution integration mechanism 30, and the gear ratio Gr of the transmission 60 according to Equation (3) given below (step S260). Equation (3) is readily introduced from the alignment chart of Fig. 6. The CPU 72 subsequently calculates a lower torque restriction Tm2min and an upper torque restriction Tm2max as minimum and maximum torques output from the motor MG2 according to Equations (4) and (5) given below (step S270). The lower torque restriction Tm2min and the upper torque restriction Tm2max are computable from the input and output limits Win and Wout of the battery 50, the torque command Tm1* and the current rotation speed Nm1 of the motor MG1, and the current rotation speed Nm2 of the motor MG2 . The CPU 72 compares the smaller between the tentative motor torque Tm2tmp and the upper torque restriction Tm2max with the lower torque restriction Tm2min and sets the greater to a torque command Tm2* of the motor MG2 (step S280). This operation limits the torque command Tm2* of the motor MG2 in the range between the input limit Win and the output limit Wout of the battery 50.

$$Tm2tmp = (Tr^* + Tm1^*/\rho) / Gr + Tset \qquad (3)$$

$$Tm2min = (Win - Tm1^* \cdot Nm1) / Nm2 \qquad (4)$$

$$Tm2max = (Wout - Tm1^* \cdot Nm1) / Nm2 \qquad (5)$$

After setting the target rotation speed Ne* and the target torque Te* of the engine 22 and the torque commands Tm1* and Tm2* of the motors MG1 and MG2, the CPU 72 sends the target rotation speed Ne* and the target torque Te* of the engine 22 to the engine ECU 24 and the torque commands Tm1* and Tm2* of the motors MG1 and MG2 to the motor ECU 40 (step S290) and exits from the drive control routine of Fig. 3. The engine ECU 24 receives the target rotation speed Ne* and the target torque Te* and performs fuel injection control and ignition control to drive the engine 22 at a specified drive point of the target rotation speed Ne* and the target torque Te*. The motor ECU 40 receives the torque commands Tm1* and Tm2* and performs switching control of the switching elements included in the respective inverters 41 and 42 to drive the motor MG1 with the torque command Tm1* and the motor MG2 with the torque command Tm2*.

When there is a change gear request at step S140, the CPU 72 identifies whether the change gear request is an upshift requirement for a gear change from the Lo gear position to the Hi gear position in the transmission 60 (step S160). Upon identification of the change gear request as an upshift requirement at step S160, an upshift process starts (step S170). The details of the upshift process executed at step S170 are described with reference to the flowchart of Fig. 7.

In the upshift process of Fig. 7, the CPU 72 of the hybrid electronic control unit 70 inputs the current setting of the torque command Tm2* of the motor MG2 (step S300), starts release of the brake B2 (step S310), and starts friction engagement of the brake B1 (step S320) . The input torque command Tm2* is then compared with a preset reference torque Tref, for example, 4N·m (step S330). When the torque command Tm2* is not higher than the preset reference torque Tref at step S330, the CPU 72 inputs the vehicle speed V and the rotation speed Nm2 of the motor MG2 (step S340) and calculates the updated target rotation speed Nm2* of the motor MG2 after the gear change according to Equation (6) given below (step S350). The updated target rotation speed Nm2* is obtained by multiplying the rotation speed Nr (=k·V) of the ring gear shaft 32a (the product of the input vehicle speed V and the conversion factor k) by the high gear ratio Ghi for the Hi gear position. The CPU 72 waits until a sufficient approach of the input rotation speed Nm2 to the updated target rotation speed Nm2* of the motor MG2 after the gear change (step S360) and fully engages the brake B1 (step S480). The processing flow then exits from this upshift process of Fig. 7 and goes back to the drive control routine of Fig. 3. When the torque command Tm2* is higher than the preset reference torque Tref at step S330, on the other hand, the CPU 72 waits until elapse of a preset waiting time (step S370) and sets a flag F1 to '1' (step S380) . The flag F1 is reset to '0' by an initialization routine (not shown) on each start of the upshift process. The waiting time is experimentally or otherwise determined as a criterion to specify the start of a torque phase in the course of the release of the brake B2 and the friction engagement of the brake B1. The change in setting of the flag F1 from '0' to '1' represents the start of the torque phase. The CPU 72 then inputs the torque command Tm2* of the motor MG2 (step S390), adjusts the engagement forces of the brakes B1 and B2 to increase with an increase in input torque command Tm2* (step S400), and waits until a start of an inertia phase (step S410). The CPU 72 then resets the flag F1 to '0' and sets a flag F2 to '1' (step S420). The start of the inertia phase implies the end of the torque phase. The change in setting of the flag F1 from '1' to '0' represents the end of the torque phase. The flag F2 is reset to '0' by an initialization routine (not shown) on each start of the upshift process. The change in setting of the flag F2 from '0' to '1' represents the start of the inertia phase. The identification of the start of the inertia phase is based on a variation in rotation speed Nm2 of the motor MG2, for example, comparison between the current rotation speed Nm2 and the previous rotation speed Nm2 of the motor MG2. The CPU 72 inputs the vehicle speed V and the rotation speed Nm2 of the motor MG2 (step S430) and calculates the updated target rotation speed Nm2* of the motor MG2 after the gear change from the input vehicle speed V and the high gear ratio Ghi for the Hi gear position according to Equation (6) given above (step S440) . The CPU 72 then waits until a decrease in rotation speed Nm2 of the motor MG2 below a specific level immediately before conclusion of the change gear, due to the friction engagement of the brake B1 (step S450) . The specific level immediately before conclusion of the change gear is determined as the sum of the updated target rotation speed Nm2* of the motor MG2 after the gear change and a preset value $\alpha$. The CPU 72 identifies the end of the inertia phase based on this decrease of the rotation speed Nm2 and resets the flag F2 to '0' (step S460). The CPU 72 subsequently waits until a sufficient approach of the input rotation speed Nm2 to the updated target rotation speed Nm2* of the motor MG2 after the gear change (step S470) and fully engages the brake B1 (step S480). The processing flow then exits from this upshift process of Fig. 7 and goes back to the drive control routine of Fig. 3. Fig. 8 is an alignment chart showing torque-rotation speed dynamics in the transmission 60 in the upshift process. The axis 'S1' represents the rotation speed of the sun gear 61 in the double-pinion planetary gear mechanism 60a. The axis 'R1/R2' represents the rotation speed of the ring gear 62 in the double-pinion planetary gear mechanism 60a and of the ring gear 66 in the single-pinion planetary gear mechanism 60b. The axis 'C1/C2' represents the rotation speed of the carrier 64 in the double-pinion planetary gear mechanism 60a and of the carrier 68 in the single-pinion planetary gear mechanism 60b. The rotation speed of the carriers 64 and 68 is equivalent to the rotation speed of the ring gear shaft 32a. The axis 'S2' represents the rotation speed of the sun gear 65 in the single-pinion planetary gear mechanism 60b, which is equivalent to the rotation speed of the motor MG2. In the Lo gear position, the brake B2 is engaged and the brake B1 is released. In the course of the gradual release of the brake B2 and the friction engagement of the brake B1 from this state, while a positive torque possibly output from the motor MG2 works to raise the rotation speed Nm2 of the motor MG2, the friction engagement of the brake B1 lowers the rotation speed Nm2 of the motor MG2. On condition that the rotation speed Nm2 of the motor MG2 sufficiently approaches to the calculated target rotation speed Nm2* in the Hi gear position, the brake B1 is fully engaged to implement the gear change to the Hi gear position. The torque transmitted from the motor MG2 to the ring gear shaft 32a is reduced in the torque phase as the transition state of the switchover of the release and the engagement of the brakes B1 and B2. On the start of the inertia phase with a variation in rotation speed Nm2 of the motor MG2, the torque transmitted from the motor MG2 to the ring gear shaft 32a is increased by the inertia force in the inertia system including the rotor of the motor MG2.

$$Nm2^* = k \cdot V \cdot Ghi \qquad (6)$$

In the drive control routine of Fig. 3, upon identification of the change gear request as a downshift requirement for a gear change from the Hi gear position to the Lo gear position in the transmission 60 at step S160, a downshift process starts (step S180). A concrete procedure of the downshift process starts releasing the brake B1, calculates the updated target rotation speed Nm2* (= k·V·Glo) of the motor MG2 after the gear change from the Hi gear position to the Lo gear position from the vehicle speed V, and fully engages the brake B2 on condition of a sufficient approach of the input rotation speed Nm2 of the motor MG2 to the updated target rotation speed Nm2* after the gear change.

In the drive control routine of Fig. 3, after the upshift process at step S170 or the downshift process at step S180 or when it is specified at step S130 in any of subsequent cycles of this routine that the current state is during the gear change, the CPU 72 specifies whether the flag F1 is equal to '1' (step S190) . The flag F1 is kept equal to '1' throughout the torque phase in the upshift process of Fig. 7. The specified value of the flag F1 accordingly determines whether the current state of the transmission 60 is the torque phase in the upshift process. Upon specification of the flag F1 equal to '1' at step S190, the CPU 72 sets a change rate ΔNe (step S200) . The CPU 72 then subtracts the change rate ΔNe from the previous target rotation speed Ne* of the engine 22 set in the previous cycle of the drive control routine to update the target rotation speed Ne* and divides the engine power demand Pe* set at step S110 by the updated target rotation speed Ne* to update the target torque Te* (step S210). The CPU 72 subsequently sets a predetermined positive torque Tup to the adjustment torque Tset (step S220) and executes the processing of and after step S230. This processing calculates the target rotation speed Nm1* and the torque command Tm1* of the motor MG1 from the target rotation speed Ne* of the engine 22 according to Equations (1) and (2) given above, sets the torque command Tm2* of the motor MG2 based on the adjustment torque Tset according to Equations (3) through (5) given above, and sends the updated target rotation speed Ne* and the updated target torque Te* of the engine 22 to the engine ECU 24 and the torque commands Tm1* and Tm2* of the motors MG1 and MG2 to the motor ECU 40. The change rate ΔNe specifies an increase rate of the direct torque Ter and may be set to increase with an increase in torque command Tm2* of the motor MG2, that is, with an increase in positive output torque of the motor MG2, on the start of the upshift process. This is because the increased positive output torque of the motor MG2 leads to a greater reduction rate of the torque transmitted from the motor MG2 to the ring gear shaft 32a. The change rate ΔNe may alternatively be fixed to a preset value. Decreasing the target rotation speed Ne* by the change rate ΔNe reduces the torque command Tm1* (that is, increases the absolute value of the negative output torque) of the motor MG1 calculated from the target rotation speed Ne* according to Equations (1) and (2) and accordingly increases the direct torque Ter (= -Tm1*/ρ). This effectively suppresses a decrease in torque applied to the ring gear shaft 32a, in spite of the decreasing torque transmitted from the motor MG2 to the ring gear shaft 32a in the torque phase of the upshift process. The electric power generated by the motor MG1 increases with the increase in direct torque Ter. The drive control of this embodiment increases the torque command Tm2* of the motor MG2 by the predetermined positive torque Tup and adjusts the engagement forces of the brakes B1 and B2 according to the torque command Tm2* of the motor MG2 (step S400 in the upshift process of Fig. 7). This causes the motor MG2 to consume the electric power generated by the motor MG1 under the condition of the increasing direct torque Ter and desirably prevents excessive input of electric power into the battery 50. The increase of the torque command Tm2* by the predetermined positive torque Tup well compensates for the decrease in torque transmitted from the motor MG2 to the ring gear shaft 32a. Namely the combined increases of the direct torque Ter and the output torque of the motor MG2 effectively prevent a significant decrease in torque applied to the ring gear shaft 32a in the upshift process of the transmission 60.

Upon specification of the flag F1 not equal to '1' but equal to '0' at step S190, the CPU 72 subsequently specifies whether the flag F2 is equal to '1' (step S230). The flag F2 is kept equal to '1' throughout the inertia phase in the upshift process of Fig. 7. The specified value of the flag F2 accordingly determines whether the current state of the transmission 60 is the inertia phase in the upshift process. Upon specification of the flag F2 equal to '1' at step S230, the CPU 72 sets a predetermined negative torque Tdn to the adjustment torque Tset (step S240) and executes the processing of and after step S250 with the adjustment torque Tset equal to Tdn. Upon specification of the flag F2 not equal to '1' but equal to '0' at step S230, on the other hand, the CPU 72 sets the adjustment torque Tset to '0' (step S150) and executes the processing of and after step S250 with the adjustment torque Tset equal to '0'. On the start of the inertia phase, the torque transmitted from the motor MG2 to the ring gear shaft 32a is excessively increased by the inertia force in the inertia system including the rotor of the motor MG2. Setting the predetermined negative torque Tdn to the adjustment torque Tset suppresses this excessive increase of the transmitted torque in the inertia phase of the transmission 60.

Fig. 9 shows time variations in rotation speed Nm2 and torque command Tm2* of the motor MG2, direct torque Ter, output torque of the ring gear shaft 32a, and charge-discharge electric power of the battery 50 in the upshift process. The upshift process starts at a time t1 in the state of output of a positive torque from the motor MG2. The torque phase starts at a time t2 after start of release of the brake B2 and friction engagement of the brake B1. In the torque phase, the drive control of the embodiment controls the motor MG1 to increase the direct torque Ter, while setting the increased torque command Tm2* of the motor MG2 and causes the motor MG2 to consume the electric power generated by the motor MG1 under the condition of the increasing direct torque Ter. The combined effects of the increased direct torque Ter and the increased output torque of the motor MG2 desirably suppress a decrease in torque transmitted from the motor MG2 to the ring gear shaft 32a in the torque phase. The operation of the motor MG2 to consume the electric power generated by the motor MG1 effectively prevents excessive input of electric power into the battery 50. On the end of the torque phase and the start of the inertia phase at a time t3, the drive control of the embodiment returns the direct torque Ter to the original level and decreases the output torque of the motor MG2 . The combined effects of the torque decreases effectively prevent an excessive increase in torque applied to the ring gear shaft 32a by the inertia force in the inertia system including the rotor of the motor MG2.

As described above, in the hybrid vehicle 20 of the embodiment, the upshift of the transmission 60 in the state of output of a positive torque from the motor MG2 reduces the torque transmitted from the motor MG2 to the ring gear shaft 32a. The drive control of the embodiment controls the engine 22 and the motor MG1 to increase the direct torque Ter directly transmitted from the engine 22 to the ring gear shaft 32a or the driveshaft by the motor MG1. The drive control then controls the motor MG2 and the brakes B1 and B2 of the transmission 60 to cause the motor MG2 to consume the electric power generated by the motor MG1 under the condition of the increasing direct torque Ter. Such control effectively suppresses a decrease in torque applied to the ring gear shaft 32a in the upshift process of the transmission 60, while preventing excessive input of electric power into the battery 50.

The hybrid vehicle 20 of the embodiment increases the direct torque Ter and causes the motor MG2 to consume the electric power generated by the motor MG1 under the condition of the increasing direct torque Ter in the upshift process. Such control may be applicable to the downshift process for the gear change of the transmission 60. In the downshift process, the torque applied to the ring gear shaft 32a may be reduced according to the gear position of the transmission 60. With a view to preventing a significant decrease in torque applied to the ring gear shaft 32a, the drive control increases the direct torque Ter and causes the motor MG2 to consume the electric power generated by the motor MG1 under the condition of the increasing direct torque Ter in the downshift process.

In the hybrid vehicle 20 of the embodiment, the drive control routine of Fig. 3 sets the predetermined positive torque Tup to the adjustment torque Tset and increases the torque command Tm2* of the motor MG2 by the adjustment torque Tset equal to the predetermined positive torque Tup. This torque control causes the motor MG2 to consume the electric power generated by the motor MG1 under the condition of the increasing direct torque Ter. One possible modification may set the adjustment torque Tset to balance the power consumption by the motor MG2 with the power generation by the motor MG1 under the condition of the increasing direct torque Ter. A concrete procedure of such modification calculates a tentative motor torque Tm1tmp from the target rotation speed Ne* set at step S120 in Fig. 3 according to Equations (1) and (2) given above. The procedure then computes a difference between the calculated tentative motor torque Tm1tmp and the torque command Tm1* of the motor MG1, which is calculated from the target rotation speed Ne* updated to increase the direct torque Ter (see steps S210 and S250 in Fig. 3). The product of this difference and the rotation speed Nm1 of the motor MG1 represents the power generation of the motor MG1. The division of the power generation of the motor MG1 by the rotation speed Nm2 of the motor MG2 is set to the adjustment torque Tset as expressed by Equation (7) given below:

$$Tset = (Tm1tmp - Tm1^{*}) \cdot Nm1 / Nm2 \qquad (7)$$

The hybrid vehicle 20 of the embodiment lowers the target rotation speed Ne* of the engine 22 to reduce the negative output torque (that is, to increase the absolute value of the output torque).of the motor MG1 and accordingly increase the direct torque Ter. One possible modification may increase the target torque Te* of the engine 22 to increase the direct torque Ter.

In the hybrid vehicle 20 of the embodiment, the transmission 60 has the two different speeds, that is, the Hi gear position and the Lo gear position. The transmission is, however, not restricted to this structure but may have three or more different speeds.

In the hybrid vehicle 20 of the embodiment described above, the power of the motor MG2 is converted by the gear change in the transmission 60 and is output to the ring gear shaft 32a or the driveshaft. The technique of the invention is, however, not restricted to this configuration but may be adopted in a hybrid vehicle 120 of a modified configuration shown in Fig. 10, where the power of the motor MG2 is converted by the gear change in the transmission 60 and is transmitted to a different axle (an axle linked to wheels 39c and 39d) from the axle connecting with the ring gear shaft 32a (the axle linked to the drive wheels 39a and 39b).

In the hybrid vehicle 20 of the embodiment, the power of the engine 22 is output via the power distribution integration mechanism 30 to the ring gear shaft 32a functioning as the drive shaft linked with the drive wheels 39a and 39b. In another possible modification of Fig. 11, a hybrid vehicle 220 may have a pair-rotor motor 230, which has an inner rotor 232 connected with the crankshaft 26 of the engine 22 and an outer rotor 234 connected with the drive shaft for outputting the power to the drive wheels 39a, 39b and transmits part of the power output from the engine 22 to the drive shaft while converting the residual part of the power into electric power.

The embodiment and its modified examples discussed above are to be considered in all aspects as illustrative and not restrictive. There may be many other modifications, changes, and alterations without departing from the scope of the present invention as defined by the claims.

**Industrial Applicability**

The technique of the invention is preferably applicable to the manufacturing industries of automobiles and other relevant industries.

## Claims

1. A power output apparatus that outputs power to a driveshaft, said power output apparatus comprising:

   an internal combustion engine (22);
   an electric power-mechanical power input output mechanism (30) that is connected to an output shaft (26) of the internal combustion engine (22) and to the driveshaft and transmits at least part of output power of the internal combustion engine (22) to the driveshaft through input and output of electric power and mechanical power, a motor (MG2) that is capable of inputting and outputting power; and
   an accumulator unit (50) that inputs and outputs electric power from and to the electric power-mechanical power input output mechanism (30) and the motor (MG2);
   **characterized by**
   a gearshift transmission structure (60) that transmits power between a rotating shaft (48) of the motor (MG2) and the driveshaft with a variable setting of a gear ratio; and
   a change gear control module that, in response to a decrease in driving force transmitted from the motor (MG2) to the driveshaft during a change of the gear ratio in the gearshift transmission structure (60) in a state of output of a positive driving force from the motor (MG2), controls the internal combustion engine (22) and the electric power-mechanical power input output mechanism (30) to increase a direct driving force, which is directly transmitted from the internal combustion engine (22) to the driveshaft via the electric power-mechanical power input output mechanism (30), while controlling the motor (MG2) and the gearshift transmission structure (60) to cause the motor (MG2) to consume at least part of electric power generated by the electric power-mechanical power input output mechanism (30) under the condition of increasing direct driving force.

2. A power output apparatus in accordance with claim 1, wherein said change gear control module controls the internal combustion engine (22) and the electric power-mechanical power input output mechanism (30) on the assumption of a decrease in driving force transmitted from the motor (MG2) to the driveshaft during an upshift change of the gear ratio in the gearshift transmission structure (60).

3. A power output apparatus in accordance with claim 1, wherein said change gear control module increases a driving force output from the motor (MG2) by a preset driving force to cause the motor (MG2) to consume at least part of the electric power generated by the electric power-mechanical power input output mechanism (30).

4. A power output apparatus in accordance with claim 1, wherein the gearshift transmission structure (60) switches over an engagement state of an engagement member via a semi-engagement transition to change the setting of the gear ratio, and said change gear control module controls the motor (MG2) and the gearshift transmission structure (60) to adjust the semi-engagement transition of the engagement member based on a driving force output from the motor (MG2) and to cause the motor (MG2) to consume at least part of the electric power generated by the electric power-mechanical power input output mechanism (30) under the condition of the increasing direct driving force.

5. A power output apparatus in accordance with claim 1, wherein said change gear control module controls the internal combustion engine (22) and the electric power-mechanical power input output mechanism (30) on the assumption of a decrease in driving force transmitted from the motor (MG2) to the driveshaft throughout a torque phase.

6. A power output apparatus in accordance with claim 5, wherein said change gear control module controls the internal combustion engine (22) and the electric power-mechanical power input output mechanism (30) on the assumption of a decrease in driving force transmitted from the motor (MG2) to the driveshaft throughout a state between elapse of a preset time after a gear ratio change instruction and a start of an inertia phase.

7. A power output apparatus in accordance with claim 1, wherein said change gear control module varies a torque input from or output to the electric power-mechanical power input output mechanism (30) to increase the direct driving force.

8. A power output apparatus in accordance with claim 7, wherein said change gear control module varies a rotation speed of the internal combustion engine (22) to increase the direct driving force.

9. A power output apparatus in accordance with claim 1, wherein the electric power-mechanical power input output mechanism (30) comprises: a three shaft-type power input output module that is linked to three shafts, the output shaft (26) of the internal combustion engine (22), the driveshaft, and a third shaft, and inputs and outputs power from and to a residual one shaft based on powers input from and output to any two shafts among the three shafts; and a generator that inputs and outputs power from and to the third shaft.

10. A power output apparatus in accordance with claim 1, wherein the electric power-mechanical power input output mechanism (30) comprises: a pair-rotor motor (MG2) that has a first rotor connected to the output shaft (26) of the internal combustion engine (22) and a second rotor connected to the driveshaft, and is driven to rotate through relative rotation of the first rotor to the second rotor.

11. A motor vehicle comprising the power output apparatus according to claim 1 or 4, wherein said driveshaft is linked to an axle.

12. A control method of a power output apparatus including an internal combustion engine (22), an electric power-mechanical power input output mechanism (30) that is connected to an output shaft (26) of the internal combustion engine (22) and to a driveshaft and transmits at least part of output power of the internal combustion engine (22) to the driveshaft through input and output of electric power and mechanical power, a motor (MG2) that is capable of inputting and outputting power; a gearshift transmission structure (60) that transmits power between a rotating shaft (48) of the motor (MG2) and the driveshaft with a variable setting of a gear ratio, and an accumulator unit (50) that inputs and outputs electric power from and to the electric power-mechanical power input output mechanism (30) and the motor (MG2),

said control method being **characterized by** the step:
controlling the internal combustion engine (22) and the electric power-mechanical power input output mechanism (30), in response to a decrease in driving force transmitted from the motor (MG2) to the driveshaft during a change of the gear ratio in the gearshift transmission structure (60) in a state of output of a positive driving force from the motor (MG2), to increase a direct driving force, which is directly transmitted from the internal combustion engine (22) to the driveshaft via the electric power-mechanical power input output mechanism (30), while controlling the motor (MG2) and the gearshift transmission structure (60) to cause the motor (MG2) to consume at least part of electric power generated by the electric power-mechanical power input output mechanism (30) under the condition of increasing direct driving force.

13. A control method of the power output apparatus in accordance with claim 12, wherein the gearshift transmission structure (60) switches over an engagement state of an engagement member via a semi-engagement transition to change the gear ratio, said control method controlling the motor (MG2) and the gearshift transmission structure (60) to adjust the semi-engagement transition of the engagement member based on a driving force output from the motor (MG2) and to cause the motor (MG2) to consume at least part of the electric power generated by the electric power-mechanical power input output mechanism (30) under the condition of the increasing direct driving force.

## Patentansprüche

1. Leistungsabgabegerät, das eine Leistung zu einer Antriebswelle abgibt, wobei das Leistungsabgabegerät Folgendes aufweist:

eine Brennkraftmaschine (22);
einen Elektrische Leistung-Mechanische Leistung-Eingabe-Ausgabe-Mechanismus (30), der mit einer Ausgangswelle (26) der Brennkraftmaschine (22) und mit der Antriebswelle verbunden ist und zumindest einen Teil einer Abgabeleistung der Brennkraftmaschine (22) durch eine Eingabe und Ausgabe einer elektrischen Leistung und einer mechanischen Leistung zu der Antriebswelle überträgt,
einen Motor (MG2), der dazu in der Lage ist, Leistung aufzunehmen und auszugeben; und

eine Akkumulatoreinheit (50), die elektrische Leistung von und zu dem Elektrische Leistung-Mechanische Leistung-Eingabe-Ausgabe-Mechanismus (30) und dem Motor (MG2) ein- bzw. ausgibt;
**gekennzeichnet durch**
einen Gangwechselgetriebeaufbau (60), der Leistung zwischen einer Drehwelle (48) des Motors (MG2) und der Antriebswelle mit einer variablen Einstellung eines Übersetzungsverhältnisses überträgt;
einem Gangänderungssteuerungsmodul, das als Reaktion auf eine Abnahme einer Antriebskraft, das während einer Änderung des Übersetzungsverhältnisses in dem Gangwechselgetriebeaufbau (60) bei einem Zustand einer Ausgabe einer positiven Antriebskraft von dem Motor (MG2) von dem Motor (MG2) zu der Antriebswelle übertragen wird, die Brennkraftmaschine (22) und den Elektrische Leistung-Mechanische Leistung-Eingabe-Ausgabe-Mechanismus (30) steuert, um eine direkte Antriebskraft zu erhöhen, die von der Brennkraftmaschine (22) über den Elektrische Leistung-Mechanische Leistung-Eingabe-Ausgabe-Mechanismus (30) direkt zu der Antriebswelle übertragen wird, während es den Motor (MG2) und den Gangwechselgetriebeaufbau (60) steuert, um zu bewirken, dass der Motor (MG2) zumindest einen Teil einer elektrischen Leistung verbraucht, die durch den Elektrische Leistung-Mechanische Leistung-Eingabe-Ausgabe-Mechanismus (30) unter der Bedingung eines Erhöhens einer direkten Antriebskraft erzeugt wird.

2. Leistungsabgabegerät gemäß Anspruch 1, wobei das Gangänderungssteuerungsmodul die Brennkraftmaschine (22) und den Elektrische Leistung-Mechanische Leistung-Eingabe-Ausgabe-Mechanismus (30) unter der Annahme einer Verringerung einer Antriebskraft steuert, die von dem Motor (MG2) während einer Heraufschaltänderung des Übersetzungsverhältnisses in dem Gangwechselgetriebeaufbau (60) zu der Antriebswelle übertragen wird.

3. Leistabgabegerät gemäß Anspruch 1, wobei das Gangänderungssteuerungsmodul eine Antriebskraftabgabe von dem Motor (MG2) um eine voreingestellte Antriebskraft erhöht, um zu bewirken, dass der Motor (MG2) zumindest einen Teil der durch den Elektrische Leistung-Mechanische Leistung-Eingabe-Ausgabe-Mechanismus (30) erzeugten Leistung verbraucht.

4. Leistungsabgabegerät gemäß Anspruch 1, wobei der Gangwechselgetriebeaufbau (60) einen Eingriffszustand eines Eingriffsbauteils über einen Halbeingriffsübergang umschaltet, um die Einstellung des Übersetzungsverhältnisses zu ändern, und wobei das Gangänderungssteuerungsmodul den Motor (MG2) und den Gangwechselgetriebeaufbau (60) steuert, um den Halbeingriffsübergang des Eingriffsbauteils basierend auf einer Antriebskraftabgabe von dem Motor (MG2) einzustellen, und um zu bewirken, dass der Motor (MG2) zumindest einen Teil der durch den Elektrische Leistung-Mechanische Leistung-Eingabe-Ausgabe-Mechanismus (30) erzeugten elektrischen Leistung unter der Bedingung des Erhöhens einer direkten Antriebskraft verbraucht.

5. Leistungsabgabegerät gemäß Anspruch 1, wobei das Gangänderungssteuerungsmodul die Brennkraftmaschine (22) und den Elektrische Leistung-Mechanische Leistung-Eingabe-Ausgabe-Mechanismus (30) unter der Annahme einer Verringerung einer Antriebskraft steuert, die von dem Motor (MG2) über eine Drehmomentphase hinweg zu der Antriebswelle übertragen wird.

6. Leistungsabgabegerät gemäß Anspruch 5, wobei das Gangänderungssteuerungsmodul die Brennkraftmaschine (22) und den Elektrische Leistung-Mechanische Leistung-Eingabe-Ausgabe-Mechanismus (30) unter der Annahme einer Verringerung der Antriebskraft steuert, die über einen Zustand zwischen einem Verstreichen einer voreingestellten Zeit nach einer Übersetzungsverhältnisänderungsanweisung und einem Start einer Trägheitsphase des Motors (MG2) zu der Antriebswelle übertragen wird.

7. Leistungsabgabegerät gemäß Anspruch 1, wobei das Gangänderungssteuerungsmodul eine Drehmomenteingabe von oder Ausgabe zu dem Elektrische Leistung-Mechanische Leistung-Eingabe-Ausgabe-Mechanismus (30) ändert, um die direkte Antriebskraft zu erhöhen.

8. Leistungsabgabegerät gemäß Anspruch 7, wobei das Gangänderungssteuerungsmodul eine Drehzahl der Brennkraftmaschine (22) verändert, um die direkte Antriebskraft zu erhöhen.

9. Leistungsabgabegerät gemäß Anspruch 1, wobei der Elektrische Leistung-Mechanische Leistung-Eingabe-Ausgabe-Mechanismus (30) Folgendes aufweist: ein dreiwelliges Leistungs-Eingabe-Ausgabe-Modul, das mit drei Wellen verbunden ist, der Ausgangswelle (26) der Brennkraftmaschine (22), der Antriebswelle, und einer dritten Welle, und Leistung von und zu einer verbleibenden Welle basierend auf Leistungseingaben von und Ausgaben zu einer von zwei Wellen unter den drei Wellen ein- bzw. ausgibt; und einen Generator, der Leistung von und zu der dritten Welle aus- bzw. eingibt.

**10.** Leistungsabgabegerät gemäß Anspruch 1, wobei der Elektrische Leistung-Mechanische Leistung-Eingabe-Ausgabe-Mechanismus (30) Folgendes aufweist: einen Motor (MG2) mit paarweiser Rotoranordnung, der einen ersten Rotor, der mit der Ausgabewelle(26) der Brennkraftmaschine (22) verbunden ist, und einen zweiten Rotor aufweist, der mit der Antriebswelle verbunden ist, und der angetrieben wird, um sich durch eine Relativdrehung des ersten Rotors zu dem zweiten Rotor zu drehen.

**11.** Motorfahrzeug mit dem Leistungsabgabegerät gemäß Anspruch 1 oder 4, wobei die Antriebswelle mit einer Achse verbunden ist.

**12.** Steuerverfahren eines Leistungsabgabegeräts mit einer Brennkraftmaschine (22), einem Elektrische Leistung-Mechanische Leistung-Eingabe-Ausgabe-Mechanismus (30), der mit einer Ausgangswelle (26) der Brennkraftmaschine (22) und mit einer Antriebswelle verbunden ist und zumindest einen Teil einer Abgabeleistung der Brennkraftmaschine (22) durch eine Eingabe und Ausgabe von elektrischer Leistung und mechanischer Leistung zu der Antriebswelle überträgt, und einem Motor (MG2), der dazu in der Lage ist, Leistung aufzunehmen bzw. auszugeben; einem Gangwechselgetriebeaufbau (60), der Leistung zwischen einer Drehwelle (48) des Motors (MG2) und der Antriebswelle mit einer variablen Einstellung eines Übersetzungsverhältnisses überträgt, und einer Akkumulatoreinheit (50), die eine elektrische Leistung von und zu dem Elektrische Leistung-Mechanische Leistung-Eingabe-Ausgabe-Mechanismus (30) und dem Motor (MG2) ein- bzw. ausgibt,
wobei das Steuerverfahren durch den folgenden Schritt **gekennzeichnet** ist:

Steuern der Brennkraftmaschine (22) und des Elektrische Leistung-Mechanische Leistung-Eingabe-Ausgabe-Mechanismus (30) als Reaktion auf eine Verringerung einer Antriebskraft, die von dem Motor (MG2) während einer Änderung des Übersetzungsverhältnisses in dem Gangwechselgetriebeaufbau (60) bei einem Zustand einer Ausgabe einer positiven Antriebskraft von dem Motor (MG2) an die Antriebswelle übertragen wird, um eine direkte Antriebskraft zu erhöhen, die von der Brennkraftmaschine (22) über den Elektrische Leistung-Mechanische Leistung-Eingabe-Ausgabe-Mechanismus (30) direkt zu der Antriebswelle übertragen wird, während der Motor (MG2) und der Gangwechselgetriebeaufbau (60) gesteuert werden, um zu bewirken, dass der Motor (MG2) unter der Bedingung eines Erhöhens einer direkten Antriebskraft zumindest einen Teil einer elektrischen Leistung verbraucht, die durch den Elektrische Leistung-Mechanische Leistung-Eingabe-Ausgabe-Mechanismus (30) erzeugt wird.

**13.** Steuerverfahren des Leistungsabgabegeräts gemäß Anspruch 12, wobei der Gangwechselgetriebeaufbau (60) einen Eingriffszustand eines Eingriffsbauteils über einen Halbeingriffsübergang umschaltet, um das Übersetzungsverhältnis zu ändern, wobei das Steuerverfahren den Motor (MG2) und den Gangwechselgetriebeaufbau (60) steuert, um den Halbeingriffsübergang des Eingriffsbauteils basierend auf einer Antriebskraftabgabe des Motor (MG2) einzustellen, und um zu bewirken, dass der Motor (MG2) unter der Bedingung des Erhöhens der direkten Antriebskraft zumindest einen Teil der elektrischen Leistung verbraucht, die durch den Elektrische Leistung-Mechanische Leistung-Eingabe-Ausgabe-Mechanismus (30) erzeugt wird.

## Revendications

**1.** Appareil de sortie de puissance qui délivre en sortie de la puissance à un arbre de transmission, ledit appareil de sortie de puissance comprenant :

un moteur à combustion interne (22) ;
un mécanisme d'entrée/de sortie de puissance mécanique/de puissance électrique (30) qui est raccordé à un arbre de sortie (26) du moteur à combustion interne (22) et à l'arbre de transmission et transmet au moins une partie de la puissance de sortie du moteur à combustion interne (22) à l'arbre de transmission à travers l'entrée et la sortie de puissance électrique et de puissance mécanique, un moteur-générateur (MG2) qui est capable d'introduire et de délivrer en sortie de la puissance ; et
une unité d'accumulation (50) qui introduit et délivre en sortie de la puissance électrique à partir du et au mécanisme d'entrée/de sortie de puissance mécanique/de puissance électrique (30) et au moteur-générateur (MG2) ; **caractérisé par**
une structure de transmission de changement de vitesse (60) qui transmet de la puissance entre un arbre rotatif (48) du moteur-générateur (MG2) et l'arbre de transmission avec un réglage variable d'un rapport de vitesse; et un module de commande de changement de vitesse qui, en réponse à une diminution de la force d'entraînement transmise à partir du moteur-générateur (MG2) à l'arbre de transmission pendant un changement du rapport de vitesse dans la structure de transmission du changement de vitesse (60) dans un état de sortie d'une force d'entraînement positive à partir du moteur-générateur (MG2), commande le moteur à combustion interne (22) et le mécanisme d'entrée/de sortie de puissance mécanique/de puissance électrique (30) pour augmenter une force d'entraînement directe, qui est directement transmise du moteur à combustion interne (22) à l'arbre de transmission par le biais du mécanisme d'entrée/de sortie de puissance mécanique/de puissance électrique (30), tout en commandant le moteur-générateur (MG2) et la structure de transmission de changement de vitesse (60) pour amener le moteur-générateur (MG2) à consommer au moins une partie de la puissance électrique générée par le mécanisme d'entrée/de sortie de puissance mécanique/de puissance électrique (30) sous la condition d'augmentation de la force d'entraînement directe.

**2.** Appareil de sortie de puissance selon la revendication 1, dans lequel ledit module de commande de changement de vitesse commande le moteur à combustion interne (22) et du mécanisme d'entrée/de sortie de puissance mécanique/de puissance électrique (30) en supposant une diminution de la force d'entraînement transmise du moteur-générateur (MG2) à l'arbre de transmission pendant un passage à la vitesse supérieure du rapport de vitesse dans la structure de transmission de changement de vitesse (60).

**3.** Appareil de sortie de puissance selon la revendication 1, dans lequel ledit module de commande de changement de vitesse augmente une force d'entraînement délivrée à partir du moteur-générateur (MG2) par une force d'entraînement préétablie pour amener le moteur-générateur (MG2) à consommer au moins une partie de la puissance électrique générée par le mécanisme d'entrée/de sortie de puissance mécanique/de puissance électrique (30).

**4.** Appareil de sortie de puissance selon la revendication 1, dans lequel la structure de transmission de changement de vitesse (60) commute un état d'engagement d'un élément d'engagement par le biais d'une transition à semi-engagement pour modifier le réglage du rapport de vitesse, et ledit module de commande de changement de vitesse commande le moteur-générateur (MG2) et la structure de transmission de changement de vitesse (60) pour ajuster la transition à semi-engagement de l'élément d'engagement sur la base d'une force d'entraînement délivrée à partir du moteur-générateur (MG2) et pour amener le moteur-générateur (MG2) à consommer au moins une partie de la puissance électrique générée par le mécanisme d'entrée/de sortie de puissance mécanique/de puissance électrique (30) sous la condition de l'augmentation de la force d'entraînement directe.

**5.** Appareil de sortie de puissance selon la revendication 1, dans lequel ledit module de commande de changement de vitesse commande le moteur à combustion interne (22) et le mécanisme d'entrée/de sortie de puissance mécanique/de puissance électrique (30) en supposant une diminution de la force d'entraînement transmise du moteur-générateur (MG2) à l'arbre de transmission à travers une phase de couple.

**6.** Appareil de sortie de puissance selon la revendication 5, dans lequel ledit module de commande de changement de vitesse commande le moteur à combustion interne (22) et le mécanisme d'entrée/de sortie de puissance mécanique/de puissance électrique (30) en supposant une diminution de la force d'entraînement transmise du moteur-générateur (MG2) à l'arbre de transmission à travers un état entre le passage d'un temps préétabli après une instruction de changement du rapport de vitesse et un début d'une phase d'inertie.

**7.** Appareil de sortie de puissance selon la revendication 1, dans lequel ledit module de commande de changement de vitesse fait varier un couple introduit depuis ou délivré en sortie au mécanisme d'entrée/de sortie de puissance mécanique/de puissance électrique (30) pour augmenter la force d'entraînement directe.

**8.** Appareil de sortie de puissance selon la revendication 7, dans lequel ledit module de commande de changement de vitesse fait varier une vitesse de rotation du moteur à combustion interne (22) pour augmenter la force d'entraînement directe.

**9.** Appareil de sortie de puissance selon la revendication 1, dans lequel le mécanisme d'entrée/de sortie de puissance mécanique/de puissance électrique (30) comprend : un module d'entrée/de sortie de puissance du type à trois arbres qui est raccordé à trois arbres, l'arbre de sortie (26) du moteur à combustion interne (22), l'arbre de transmission, et un troisième arbre, et introduit et délivre en sortie de la puissance depuis et vers un arbre résiduel sur la base de puissances introduites depuis et délivrées en sortie vers deux arbres quelconques parmi les trois arbres ; et un générateur qui introduit et délivre en sortie de la puissance depuis et vers le troisième arbre.

**10.** Appareil de sortie de puissance selon la revendication 1, dans lequel le mécanisme d'entrée/de sortie de puissance mécanique/de puissance électrique (30) comprend : un moteur-générateur à deux rotors (MG2) qui a un premier rotor raccordé à l'arbre de sortie (26) du moteur à combustion interne (22) et un deuxième rotor raccordé à l'arbre de transmission, et est entrainé pour se mettre en rotation à travers une rotation relative du premier rotor par rapport au deuxième rotor.

**11.** Véhicule automobile comprenant l'appareil de sortie de puissance selon la revendication 1 ou 4, dans lequel ledit arbre de transmission est relié à un essieu.

**12.** Procédé de commande d'un appareil de sortie de puissance incluant un moteur à combustion interne (22), un mécanisme d'entrée/de sortie de puissance mécanique/de puissance électrique (30) qui est raccordé à un arbre de sortie (26) du moteur à combustion interne (22) et à un arbre de transmission et transmet au moins une partie de la puissance de sortie du moteur à combustion interne (22) à l'arbre de transmission à travers l'entrée et la sortie de puissance électrique et de puissance mécanique, un moteur-générateur (MG2) qui est capable d'introduire et de délivrer en sortie de la puissance ; une structure de transmission de changement de vitesse (60) qui transmet de la puissance entre un arbre rotatif (48) du moteur-générateur (MG2) et l'arbre de transmission avec un réglage variable d'un rapport de vitesse, et une unité d'accumulation (50) qui introduit et délivre en sortie de la puissance électrique depuis et vers le mécanisme d'entrée/de sortie de puissance mécanique/de puissance électrique (30) et le moteur-générateur (MG2),
ledit procédé de commande étant **caractérisé par** l'étape qui consiste à :

commander le moteur à combustion interne (22) et le mécanisme d'entrée/de sortie de puissance mécanique/de puissance électrique (30), en réponse à une diminution de la force d'entraînement transmise depuis le moteur-générateur (MG2) à l'arbre de transmission pendant un changement du rapport de vitesse dans la structure de transmission de changement de vitesse (60) dans un état de sortie d'une force d'entraînement positive depuis le moteur-générateur (MG2), pour augmenter une force d'entraînement directe, qui est directement transmise du moteur à combustion interne (22) à l'arbre de transmission par le biais du mécanisme d'entrée/de sortie de puissance mécanique/de puissance électrique (30), tout en commandant le moteur-générateur (MG2) et la structure de transmission de changement de vitesse (60) pour amener le moteur-générateur (MG2) à consommer au moins une partie de la puissance électrique générée par le mécanisme d'entrée/de sortie de puissance mécanique/de puissance électrique (30) sous la condition d'augmentation de la force d'entraînement directe.

**13.** Procédé de commande de l'appareil de sortie de puissance selon la revendication 12, dans lequel la structure de transmission de changement de vitesse (60) commute un état d'engagement d'un élément d'engagement par le biais d'une transition à semi-engagement pour modifier le rapport de vitesse, ledit procédé de commande commandant le moteur-générateur (MG2) et la structure de transmission de changement de vitesse (60) pour ajuster la transition à semi-engagement de l'élément d'engagement sur la base d'une force d'entraînement délivrée en sortie à partir du moteur-générateur (MG2) et pour amener le moteur-générateur (MG2) à consommer au moins une partie de la puissance électrique générée par le mécanisme d'entrée/de sortie de puissance mécanique/de puissance électrique (30) sous la condition de l'augmentation de la force d'entraînement directe.

Fig. 1

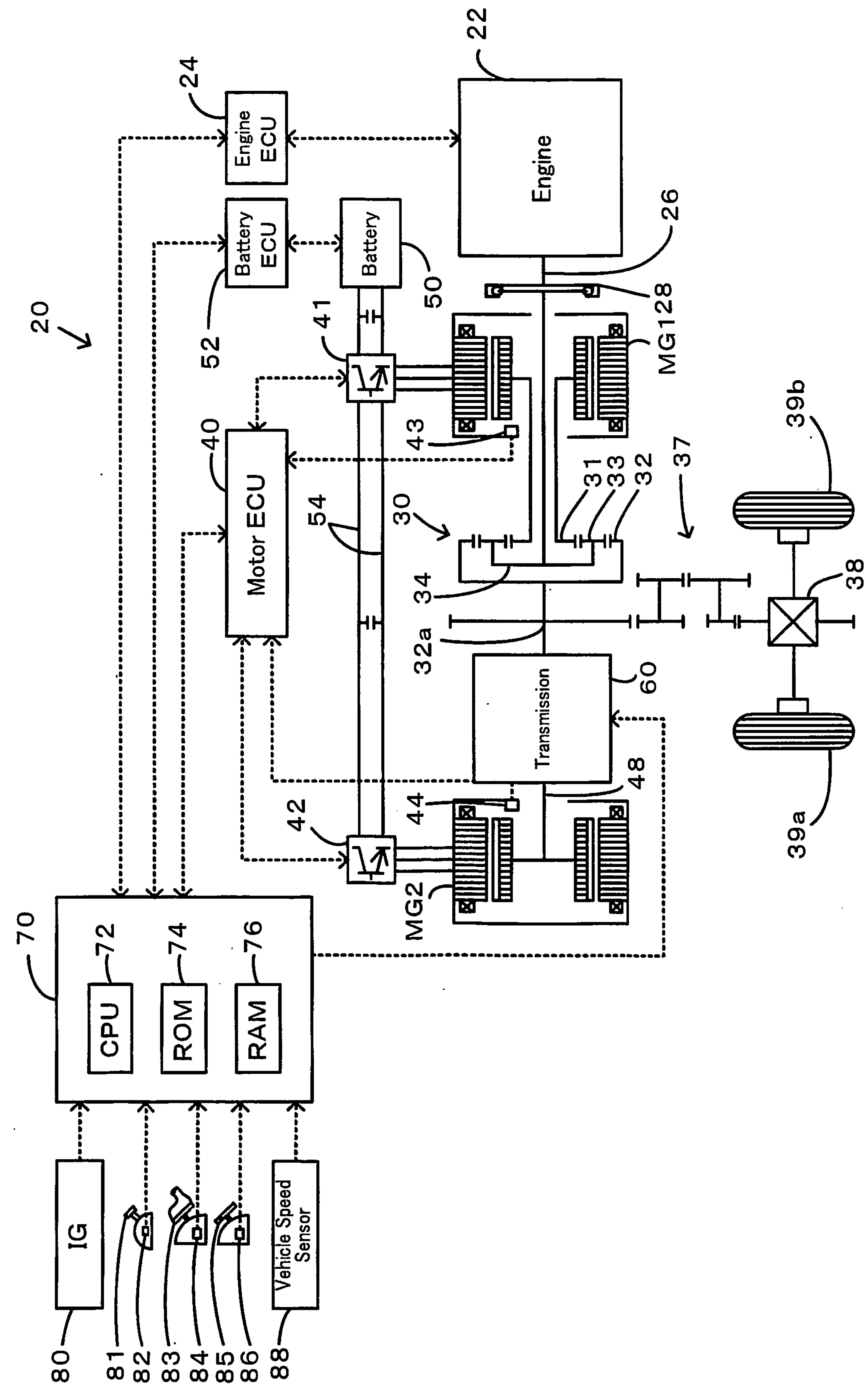
20
22
Engine
24
Engine ECU
Battery ECU
52
Battery
50
26
41
MG128
40
Motor ECU
43
54
30
31
33
32
37
34
32a
38
39b
39a
60
Transmission
48
44
42
MG2
70
72
CPU
74
ROM
76
RAM
IG
Vehicle Speed Sensor
80
81
82
83
84
85
86
88

Fig. 2

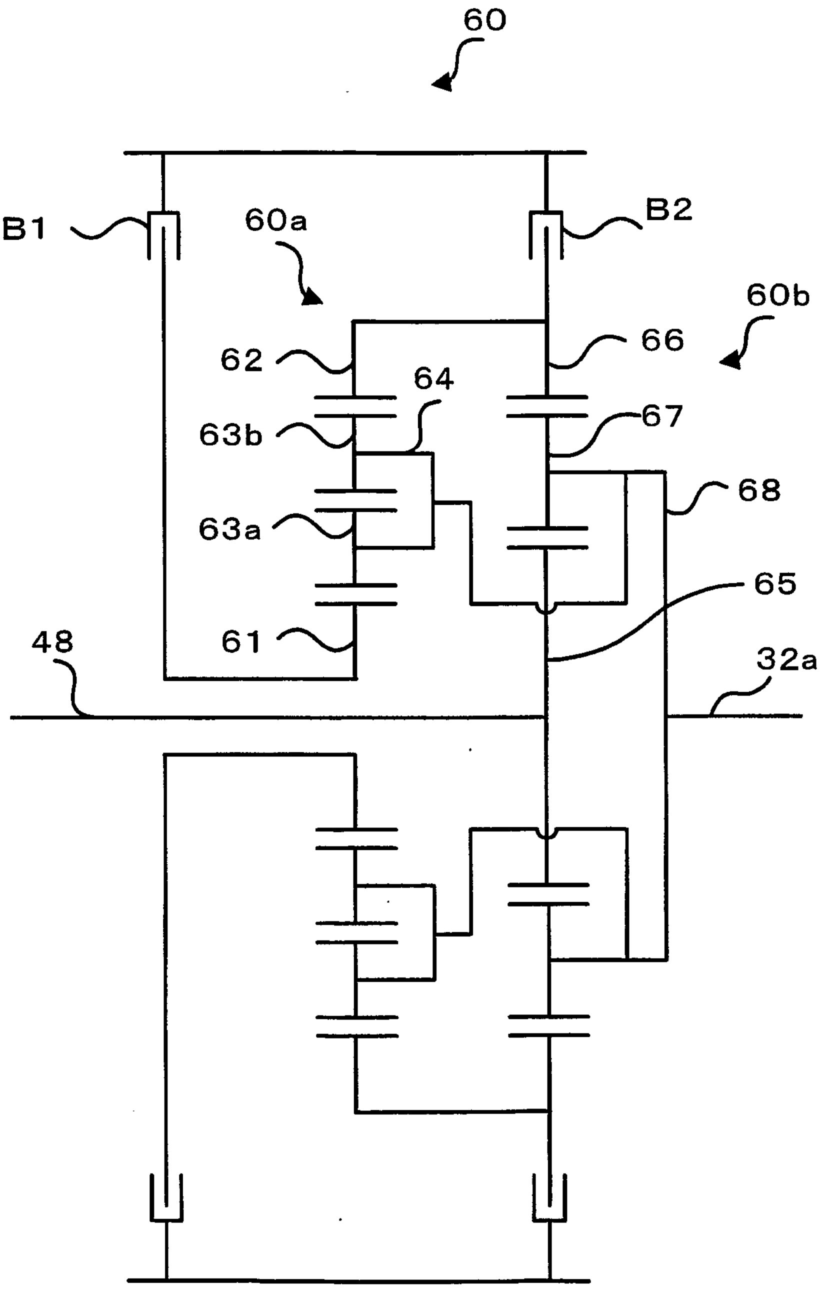

Fig. 3

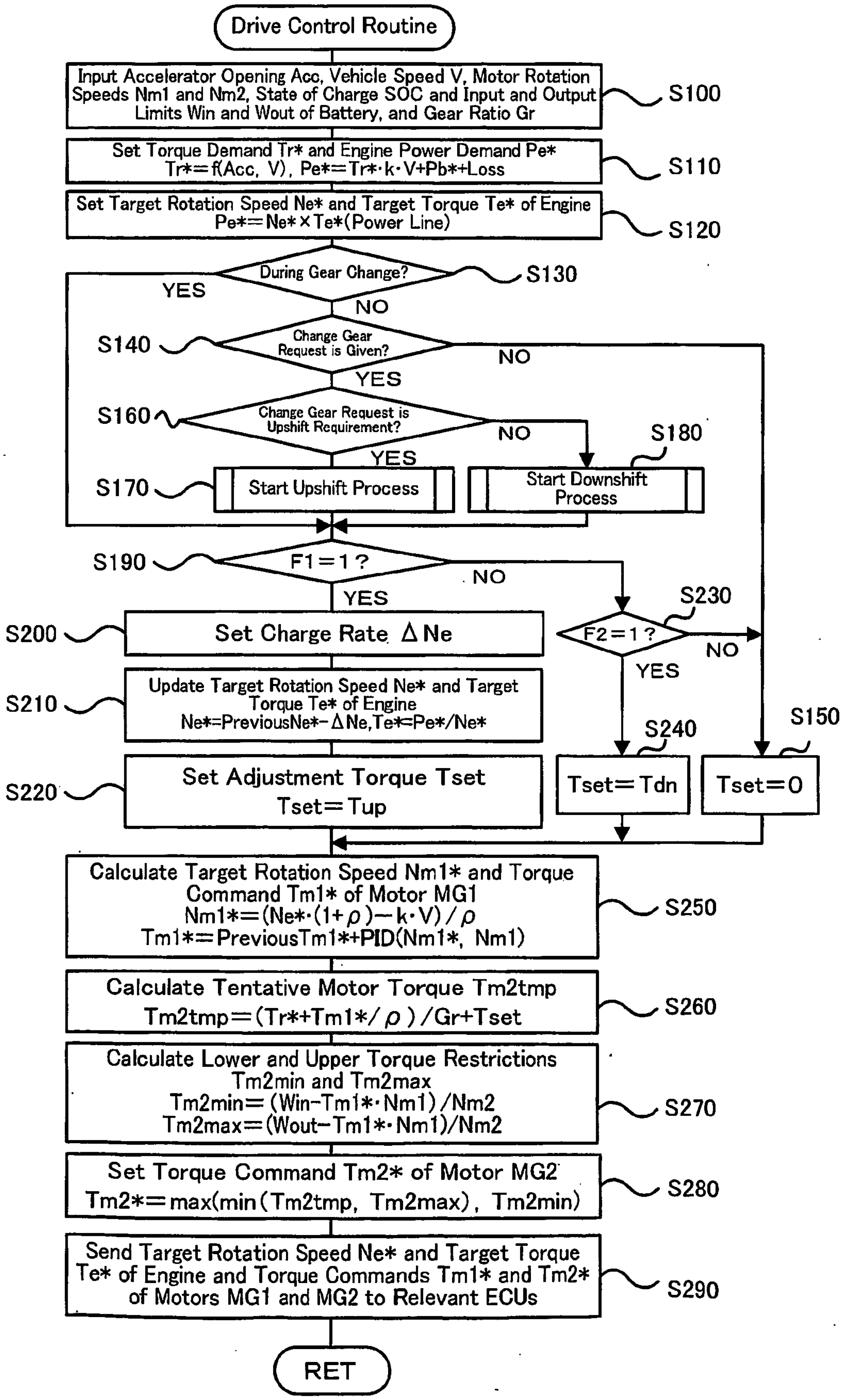
Drive Control Routine
Input Accelerator Opening Acc, Vehicle Speed V, Motor Rotation Speeds Nm1 and Nm2, State of Charge SOC and Input and Output Limits Win and Wout of Battery, and Gear Ratio Gr
S100
Set Torque Demand Tr* and Engine Power Demand Pe*
Tr*=f(Acc, V), Pe*=Tr*·k·V+Pb*+Loss
S110
Set Target Rotation Speed Ne* and Target Torque Te* of Engine
Pe*=Ne*×Te*(Power Line)
S120
During Gear Change?
S130
YES
NO
S140
Change Gear Request is Given?
NO
YES
S160
Change Gear Request is Upshift Requirement?
NO
YES
S180
S170
Start Upshift Process
Start Downshift Process
S190
F1=1?
NO
YES
S200
Set Charge Rate ΔNe
S230
F2=1?
NO
YES
S210
Update Target Rotation Speed Ne* and Target Torque Te* of Engine
Ne*=PreviousNe*−ΔNe,Te*=Pe*/Ne*
S240
S150
S220
Set Adjustment Torque Tset
Tset=Tup
Tset=Tdn
Tset=0
Calculate Target Rotation Speed Nm1* and Torque Command Tm1* of Motor MG1
Nm1*=(Ne*·(1+ρ)−k·V)/ρ
Tm1*=PreviousTm1*+PID(Nm1*, Nm1)
S250
Calculate Tentative Motor Torque Tm2tmp
Tm2tmp=(Tr*+Tm1*/ρ)/Gr+Tset
S260
Calculate Lower and Upper Torque Restrictions Tm2min and Tm2max
Tm2min=(Win−Tm1*·Nm1)/Nm2
Tm2max=(Wout−Tm1*·Nm1)/Nm2
S270
Set Torque Command Tm2* of Motor MG2
Tm2*=max(min(Tm2tmp, Tm2max), Tm2min)
S280
Send Target Rotation Speed Ne* and Target Torque Te* of Engine and Torque Commands Tm1* and Tm2* of Motors MG1 and MG2 to Relevant ECUs
S290
RET

Fig. 4

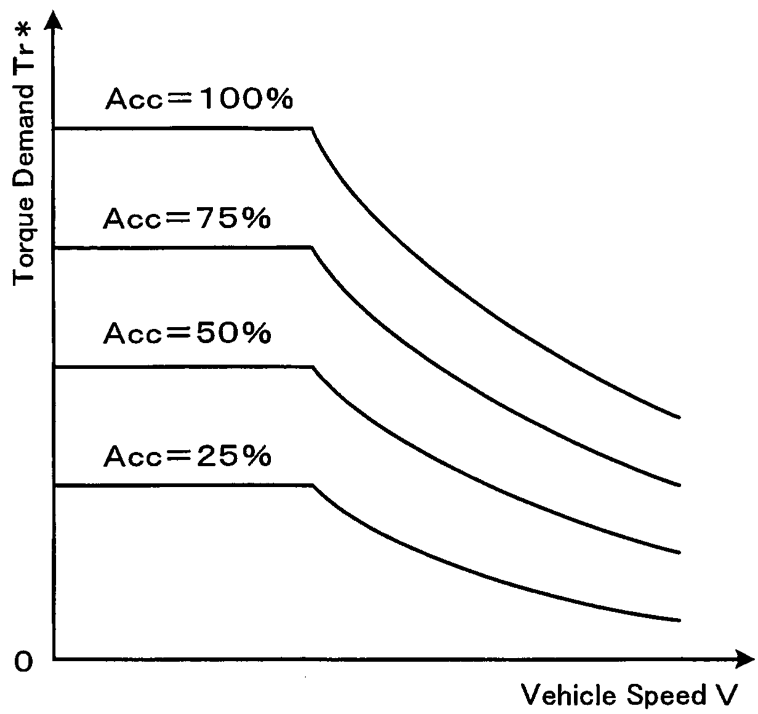
Torque Demand Tr*
Acc=100%
Acc=75%
Acc=50%
Acc=25%
0
Vehicle Speed V

Fig. 5

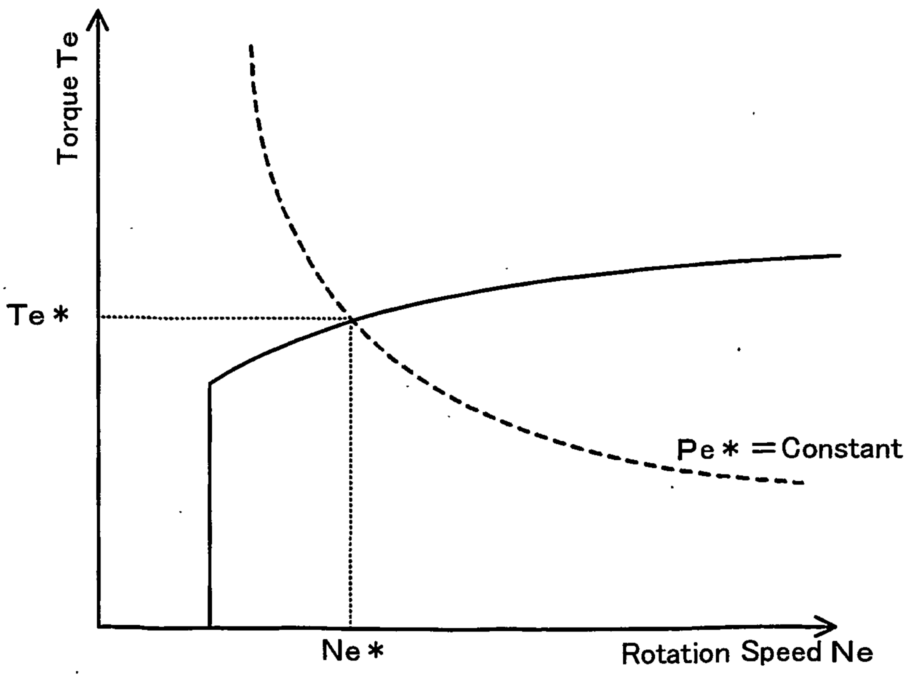
Torque Te
Te*
Pe* =Constant
Ne*
Rotation Speed Ne

Fig. 6

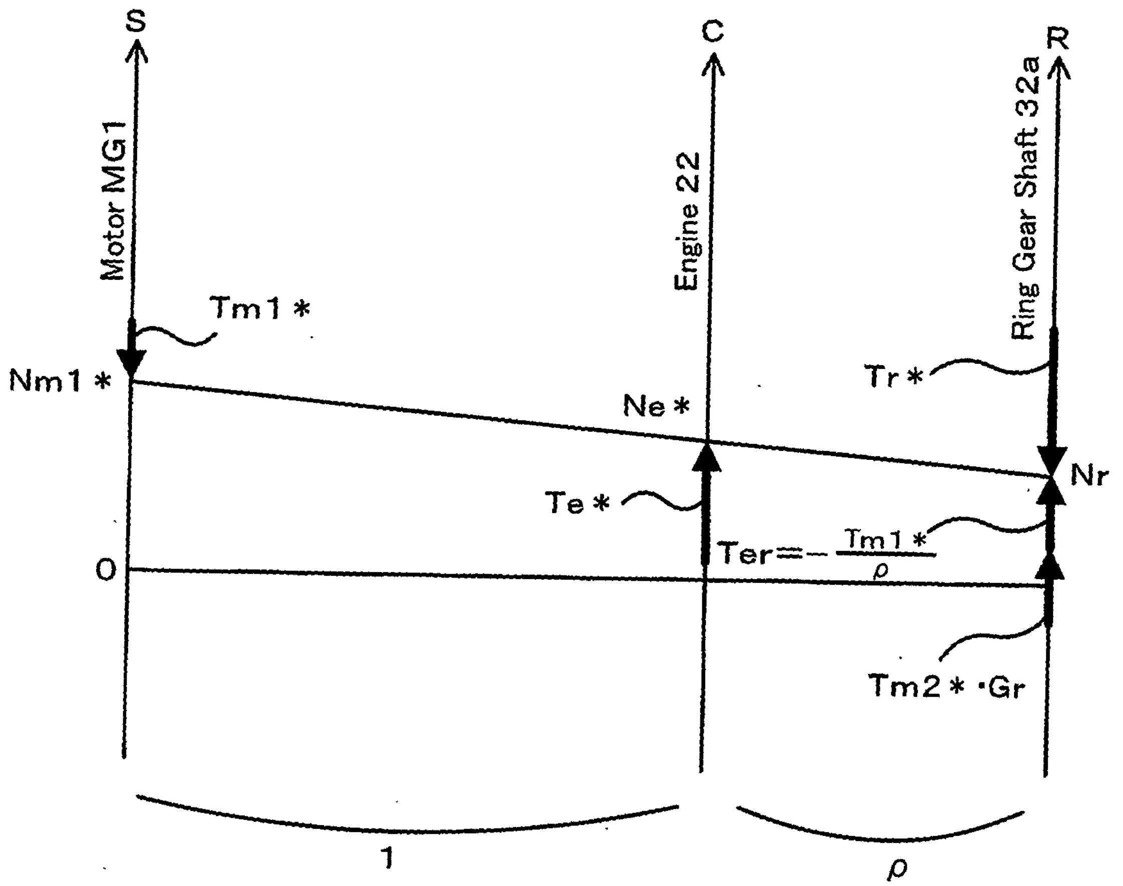
S
C
R
Motor MG1
Engine 22
Ring Gear Shaft 32a
Tm1 *
Nm1 *
Ne *
Tr *
Nr
Te *
Ter = - Tm1 * / ρ
O
Tm2 * ·Gr
1
ρ

Fig. 7

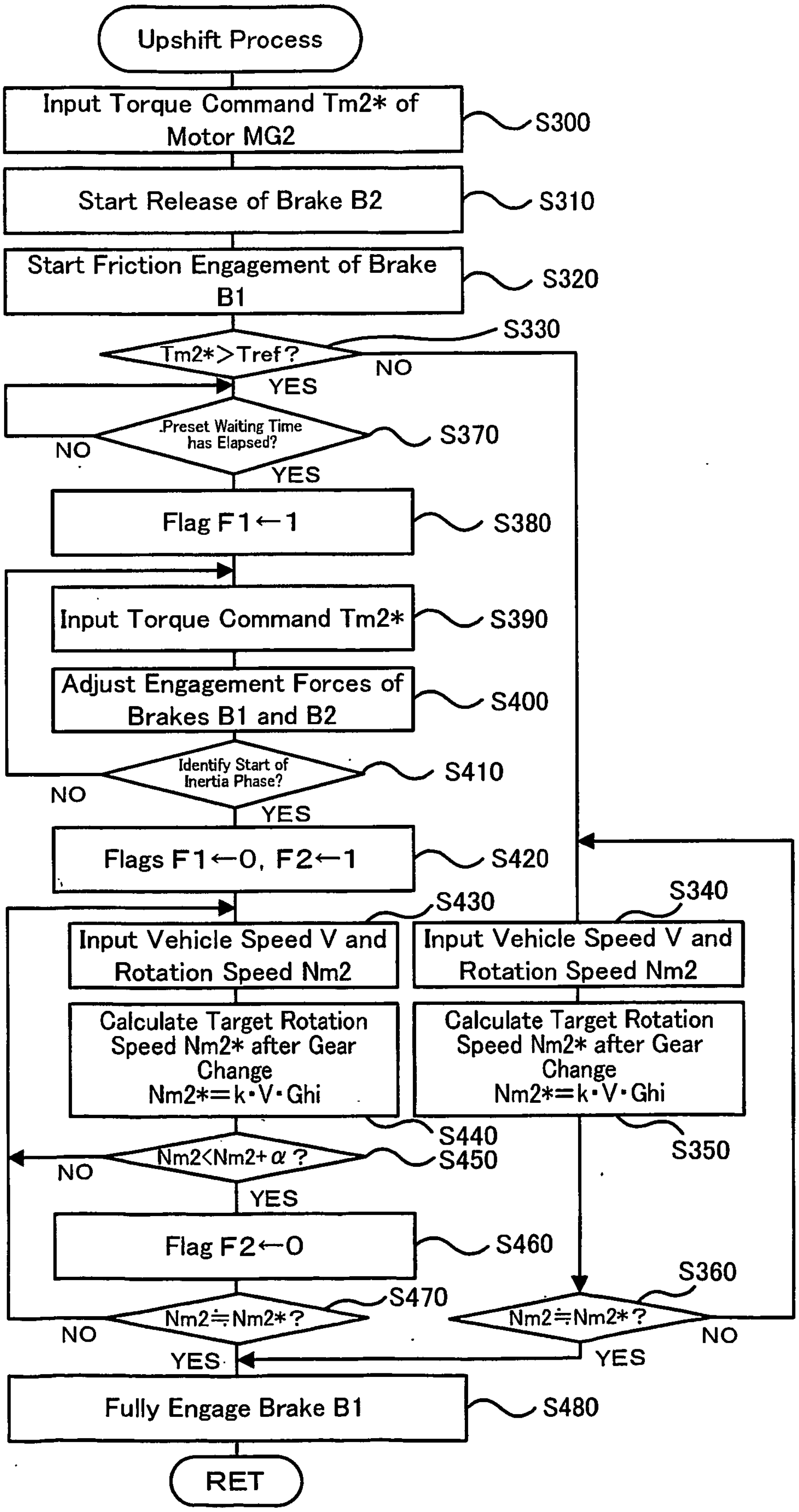
Upshift Process
Input Torque Command Tm2* of Motor MG2
S300
Start Release of Brake B2
S310
Start Friction Engagement of Brake B1
S320
Tm2*>Tref?
S330
NO
YES
Preset Waiting Time has Elapsed?
S370
NO
YES
Flag F1←1
S380
Input Torque Command Tm2*
S390
Adjust Engagement Forces of Brakes B1 and B2
S400
Identify Start of Inertia Phase?
S410
NO
YES
Flags F1←0, F2←1
S420
S430
Input Vehicle Speed V and Rotation Speed Nm2
S340
Input Vehicle Speed V and Rotation Speed Nm2
Calculate Target Rotation Speed Nm2* after Gear Change Nm2*=k•V•Ghi
Calculate Target Rotation Speed Nm2* after Gear Change Nm2*=k•V•Ghi
S440
S450
S350
Nm2<Nm2+α ?
NO
YES
Flag F2←0
S460
S470
S360
Nm2≒Nm2*?
NO
Nm2≒Nm2*?
NO
YES
YES
Fully Engage Brake B1
S480
RET

Fig. 8

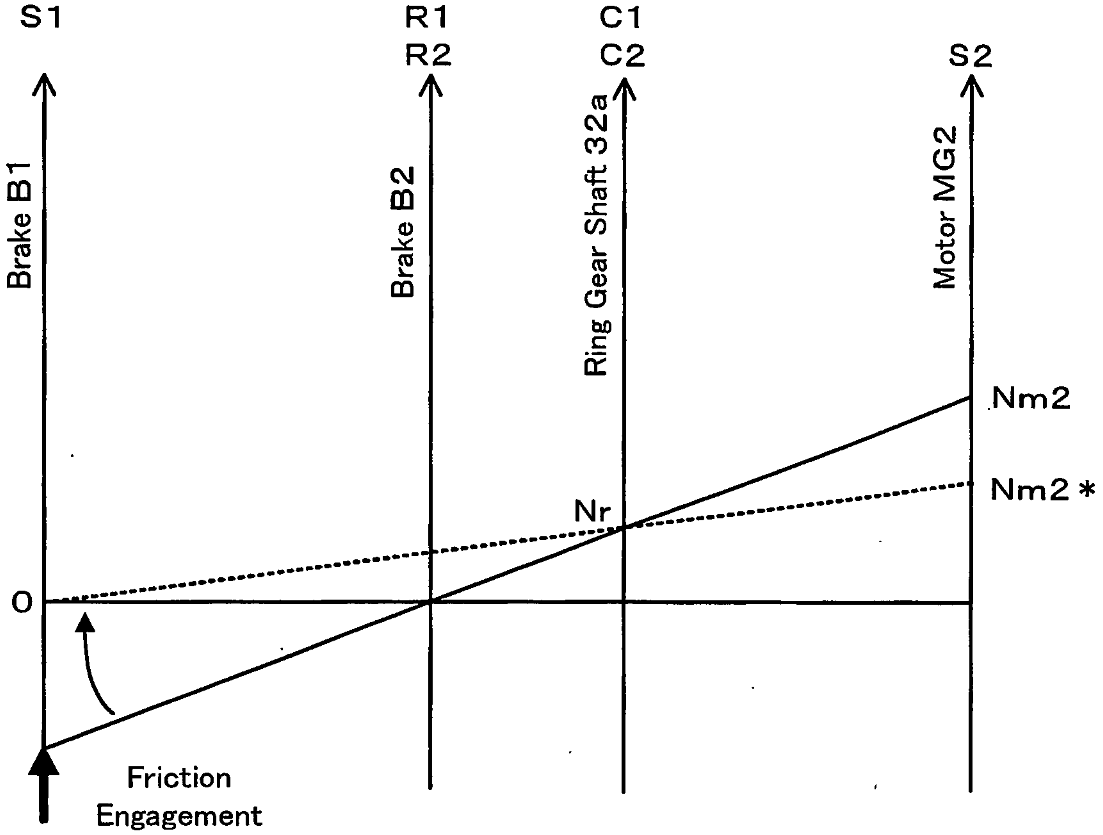
S1
R1
R2
C1
C2
S2
Brake B1
Brake B2
Ring Gear Shaft 32a
Motor MG2
Nm2
Nm2 *
Nr
0
Friction
Engagement

Fig. 9

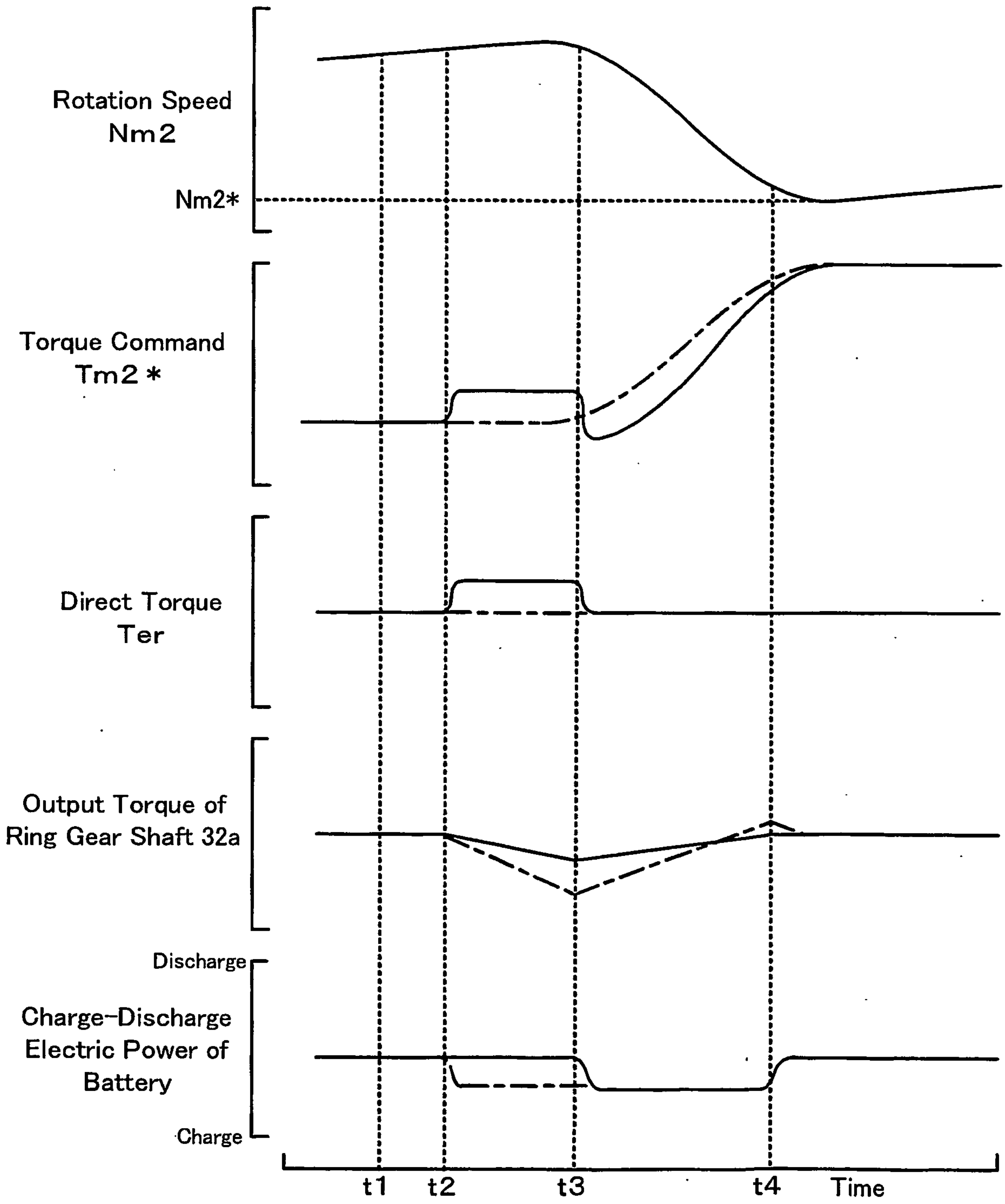
Rotation Speed
Nm2
Nm2*
Torque Command
Tm2*
Direct Torque
Ter
Output Torque of
Ring Gear Shaft 32a
Discharge
Charge-Discharge
Electric Power of
Battery
Charge
t1
t2
t3
t4
Time

Fig. 10

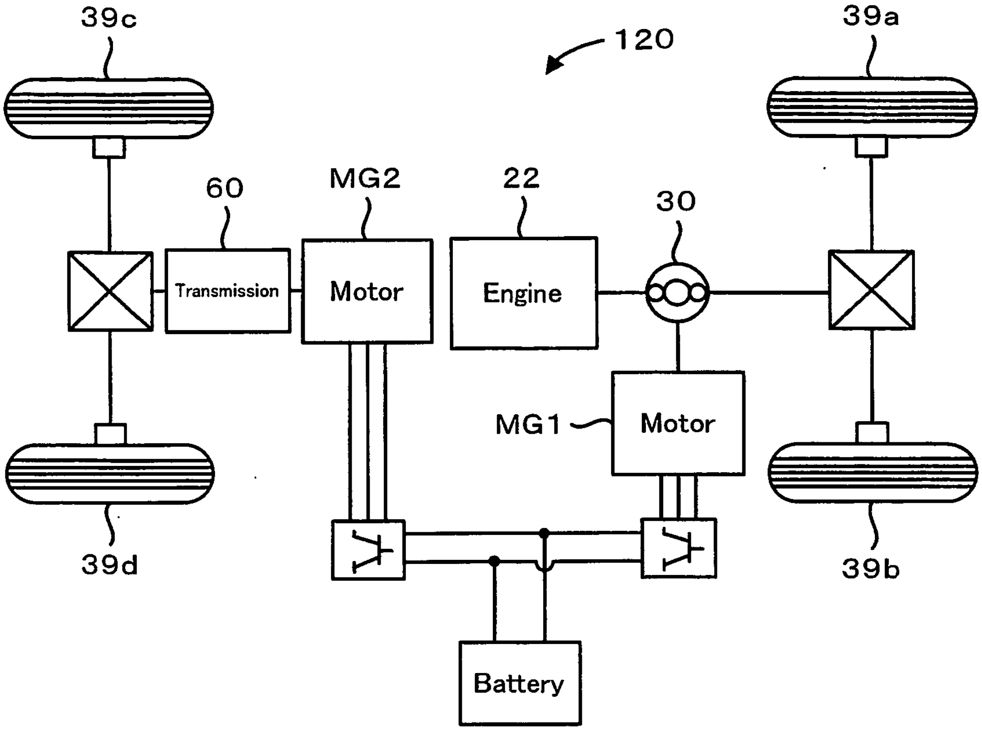
39c
120
39a
60
MG2
22
30
Transmission
Motor
Engine
MG1
Motor
39d
39b
Battery

Fig. 11

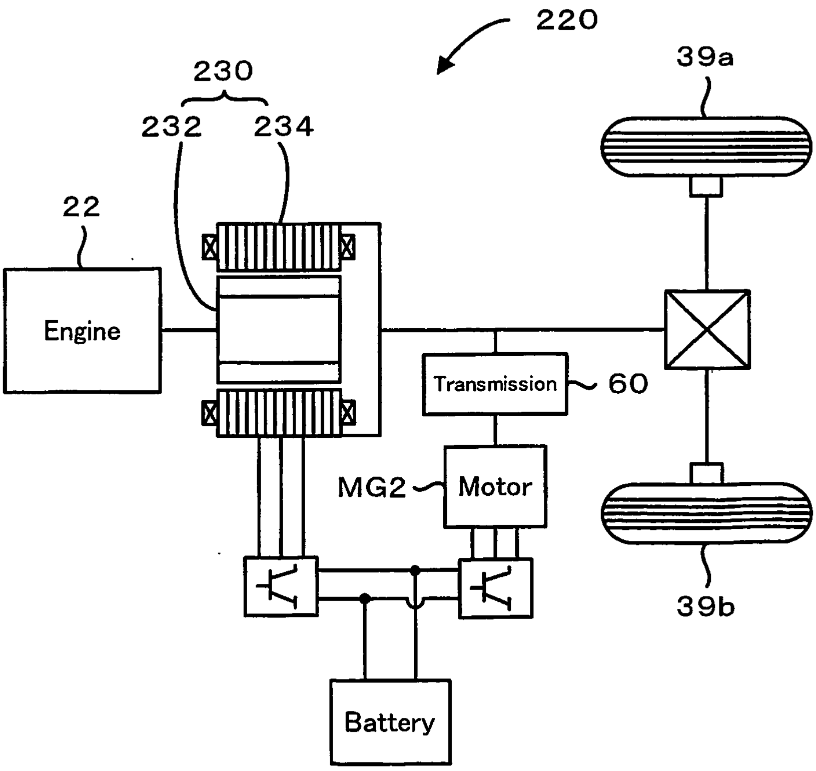
220
39a
230
232
234
22
Engine
Transmission
60
MG2
Motor
39b
Battery

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004203220 A
- US 2004231897 A1
- EP 1398196 A
- JP 2002225578 A